(19) Europäisches Patentamt
European Patent Office
Office européen des brevets

(11) **EP 2 924 459 A1**

(12) **EUROPÄISCHE PATENTANMELDUNG**

(43) Veröffentlichungstag:
**30.09.2015 Patentblatt 2015/40**

(21) Anmeldenummer: **14161556.7**

(22) Anmeldetag: **25.03.2014**

(51) Int Cl.:
**G01S 17/10** [(2006.01)]     **G01S 17/46** [(2006.01)]
**G01N 21/17** [(2006.01)]     **G01S 7/487** [(2006.01)]
**G01S 7/497** [(2006.01)]

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **ELMOS Semiconductor AG**
**44227 Dortmund (DE)**

(72) Erfinder:
• **Melcher, Rolf**
  **76227 Karlsruhe (DE)**
• **Münzer, Roland**
  **75179 Pforzheim (DE)**

(74) Vertreter: **Durm & Partner**
**Patentanwälte**
**Moltkestrasse 45**
**76133 Karlsruhe (DE)**

(54) **Sensorsystem zur Erkennung mindestens eines Objekts in einer Übertragungsstrecke**

(57)     Ein Sensorsystem zur Erkennung mindestens eines Objekts (O1 O2) in einer Übertragungsstrecke (I) umfasst mindestens einen Sender (H) und mindestens einen Empfänger (D). Der Sender (H) wird mit einem Speisesignal (S5) angesteuert, um ein Sendesignal (S21) in die Übertragungsstrecke (I) hinein zu senden, das nach Durchgang und Beeinflussung durch ein Objekt (O1 02) als modifiziertes Sendesignal (S21) zumindest zu einem Empfänger (D) gelangt. Der Empfänger (D) empfängt es als modifiziertes Empfangssignal (S22) und bildet ein Empfängerausgangssignal (S0 mit einem modifizierten Empfängerausgangssignalanteil (S0e).

Eine Signal-Erzeugungs-Einheit mit einem Wavelet-Generator (WG) erzeugt wenigstens ein Wavelet ($s_{i,j}$) als Basissignal, das in einer Verarbeitungseinheit (LF) zu einem das Empfängerausgangssignal (S0) umfassenden Verarbeitungszwischensignal weiterverarbeitet wird. Die Verarbeitungseinheit separiert einen modifizierten Empfängerausgangssignalanteil (S0e) und erzeugt daraus eine Regelwert-Matrix (YI) mit Regelwert-Signalen ($yi_{i,j}$), aus denen mittels einer Rücktransformations-Einheit ein Speisesignal (S5) oder ein Kompensations-speisesignal (S3) erzeugt wird. Die Rückführung des Kompensationsspeisesignals (S3) erfolgt in das Sensorsystem (1). Die Rücktransformations-Einheit regelt das Sensorsystem stabil aus.

Ein Schätzer (EST) selektiert wenigstens eines der Regelwert-Signale ($yi_{i,j}$) und ermittelt ein Echosignal (echo(t)) eines Objekts (O) in der Übertragungsstrecke (I), aus dem die Bestimmung der Entfernung des Objekts (O) zu dem Sensorsystem und/oder der Reflexionseigenschaften eines Objekts (O) und/oder der Transmissionseigenschaften der Übertragungsstrecke (I) erfolgen kann.

Fig. 5

EP 2 924 459 A1

**Beschreibung**

Die vorliegende Erfindung betrifft ein Sensorsystem zur Erkennung mindestens eines Objekts in einer Übertragungsstrecke, die eine erste Übertragungsstrecke und eine zweite Übertragungsstrecke einschließt, zwischen einem Sender und einem Empfänger. Das Sensorsystem umfasst mindestens einen Sender, der mit einem Speisesignal angesteuert wird, um zumindest ein bekanntes Sendesignal des Senders in die Übertragungsstrecke hinein zu senden, das nach Durchgang durch mindestens einen Teil der Übertragungsstrecke und Beeinflussung durch mindestens ein Objekt als modifiziertes Sendesignal zumindest zu einem Empfänger gelangt, der Teil des Sensorsystems ist. Das modifizierte Sendesignal wird als modifiziertes Empfangssignal im Empfänger empfangen, der daraus ein Empfängerausgangssignal mit wenigstens einem modifizierten Empfängerausgangssignalanteil bildet. Eine Verarbeitungseinheit des Sensorsystems verarbeitet das Verarbeitungszwischensignal, welches das Empfängerausgangssignal umfasst, weiter und separiert mindestens einen modifizierten Empfängerausgangssignalanteil, aus dem eine Regelwert-Matrix mit wenigstens einem Regelwert-Signal erzeugt wird, wobei mindestens ein Regelwert-Signal von Null verschieden ist.

Aus dem Stand der Technik sind eine ganze Reihe verschiedener Verfahren zum Erkennen eines Objekts in einer optischen Übertragungsstrecke bekannt.

Zu nennen sind hier beispielhaft:

DE102012024597.1

DE102013013664.4

WO2013124018

DE10001955A1

DE10024156A1

DE19839730C1

DE930983U1

DE10001943C1

DE10346741B3

DE102004025345B3

DE102005013325A1

DE102005010745B3

DE102007005187B4

Allen diesen Verfahren ist gemeinsam, dass sie nicht in der Lage sind, mehrere Objekte in einer Übertragungsstrecke ohne Zuhilfenahme verschiedener Zeitschlitze zu erkennen. Derartige Verfahren mit Zeitschlitzen sind jedoch aufwendig.

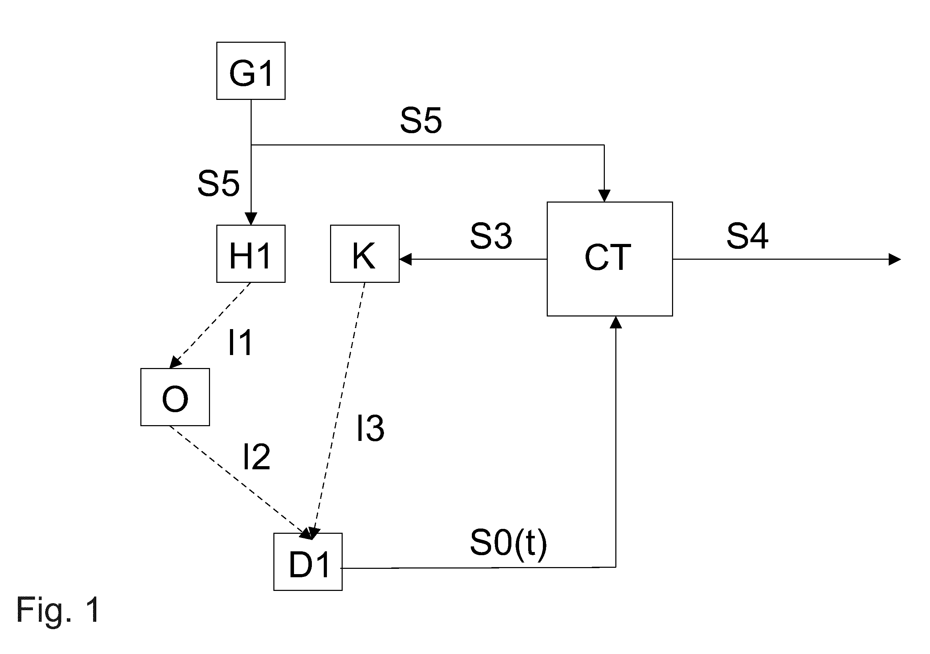

Das Problem wird anhand der Figuren 1 bis 4 erläutert:

Figur 1 zeigt ein nicht beanspruchtes, typisches Sensorsystem, ein sogenanntes Halios-System, wie es aus dem Stand der Technik bekannt ist. Ein Signalgenerator G1 erzeugt ein Sendesignal S5 und speist damit einen ersten Sender H1. Dieser strahlt in eine erste Übertragungsstrecke I1 ein, die an einem Objekt O endet.

Dort wird das Signal, welches das Objekt O durch die Übertragungsstrecke I1 erreicht hat, in eine zweite Übertragungsstrecke I2 hinein transmittiert oder reflektiert. Nach Durchgang durch diese zweite Übertragungsstrecke I2 wird das Signal von einem Empfänger D1 aufgefangen und an einen Regler CT als Empfängerausgangssignal S0(t) weitergegeben. Dieser erzeugt aus dem Sendesignal S5 und dem Empfängerausgangssignal S0(t) das Kompensatorspeisesignal S3. Mit diesem Kompensatorspeisesignal S3 wird ein Kompensationssender K gespeist, der ebenfalls (über eine dritte Übertragungsstrecke I3) in den Detektor (Empfänger) D1 einstrahlt. Diese Einstrahlung erfolgt typischerweise linear überlagernd zum Signal, das über die Übertragungsstrecke 12 zum Detektor gelangt. Der Regler CT filtert und verstärkt dabei bestimmte Signalanteile des Empfängerausgangssignals S0(t) in der Art, dass die Überlagerung der Signale im Detektor im Wesentlichen einen Gleichpegel ergibt. Das Kompensatorspeisesignal S3 ist im eingeschwungenen Zustand also komplementär kompensierend zu dem nach dem Durchgang durch die beiden Übertragungsstrecken modifizierten Sendesignal S5. Eine Regelgröße S4 des Reglers CT stellt dabei typischerweise einen Parameter dar, der mit den Transmissions- oder Reflexionseigenschaften des Objekts O oder den Übertragungseigenschaften der beiden Übertragungsstrecken 11 und 12 korrespondiert.

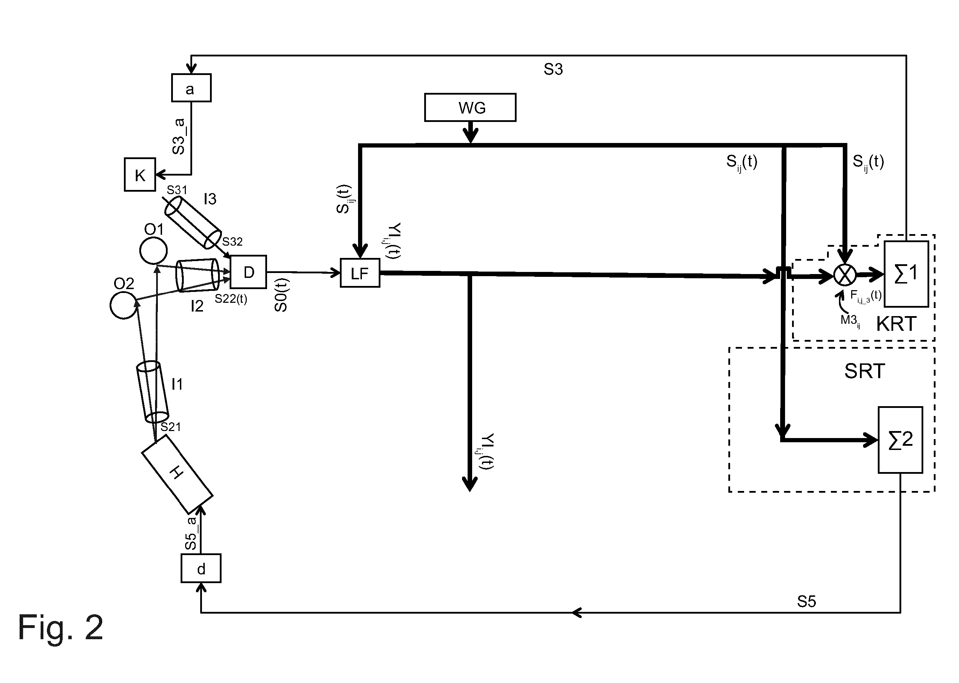

Figur 2 zeigt ein solches System etwas detaillierter: Der Sender G1 wird durch einen Wavelet-Generator WG ersetzt, der nun mehrere Signale $s_{i,j}(t)$ (Wavelets) liefert. Diese Signale $s_{i,j}(t)$ (Wavelets) werden durch eine erste Vorrichtung, die eine Linearform LF bildet, mit dem Empfängerausgangssignal S0(t) verknüpft. Es ergibt sich eine Ausgangssignalmatrix $YI_{i,j}$ der Linearform LF. Diese ist eine Matrix von Regelwertsignalen ($y_{i,j}(t)$). Jedes Element, also jedes Regelwertsignal ($y_{i,j}(t)$), dieser Ausgangssignalmatrix $YI_{i,j}$ stellt im Idealfall eines ungestörten Systems mit idealen Komponenten einen Quasigleichpegel dar. In der Realität verhindern Störungen, Rauschen und Regelfehler das erreichen eines perfekten Quasigleichpegels.

Jedes Regelwertsignal ($y_{i,j}(t)$) dieser Ausgangssignalmatrix $YI_{i,j}$ der Linearform (LF)wird nun in einer Kompensationsrücktransformationseinheit KRT durch jeweils einen Multiplizierer einer dritten Multipliziereinheit $M3_{ij}$ wieder mit dem korrespondierenden Wavelet-Signal $s_{i,j}(t)$ (Ausgangssignal) des Wavelet-Generators WG multipliziert. Es ergibt sich die Roh-Kompensationssignalmatrix $F_{i,j\_3}$ mit den zugehörigen Rohkompensationssendesignalen $F_{i,j\_3}(t)$. Die einzelnen Elemente dieser Roh-Kompensationssignalmatrix $F_{i,j\_3}$ werden durch einen Summierer Σ1 zum Kompensationssignal S3 reduziert, genauer gesagt, zusammengefasst. Über einen ersten Sendeverstärker a wird der Kompensationssender K gespeist. Dabei versieht der erste Verstärker das Kompensationssignal (S3) typischerweise mit einem Offset. Der Kompensationssender (K) strahlt wieder in die besagte dritte Übertragungsstrecke 13 das gesendete Kompensationssendersignal S31 ein. Die dritte Übertragungsstrecke 13 ist vorzugsweise bekannt. Am Ausgang der dritten Übertragungsstrecke 13 befindet sich wieder der Empfänger D. Dieser empfängt das gesendete Kompensationssendersignal S31 nach Durchgang durch die dritte Übertragungsstrecke 13 als zweites Übertragungsstreckenausgangssignal S32.

Das Sendesignal S5 wird durch summierende Zusammenfassung typischer Weise nur eines Teils der Wavelet-Signale $s_{i,j}(t)$ durch den zweiten Summierer Σ2 gebildet. Dabei kann im Extremfall eines der Signale $s_{i,j}(t)$ dem Sendesignal S5 entsprechen. Das Sendesignal S5 speist wieder den Sender H, der in eine erste Übertragungsstrecke I1 das gesendete Sendersignal S21 einspeist an deren Ausgang das Signal durch ein oder mehr Objekte O1, 02 reflektiert oder transmittiert wird. Dabei wird das derartig durch Reflexion oder Transmission modifizierte Signal in eine zweite Übertragungsstrecke 12 eingespeist. Am Ausgang der zweiten Übertragungsstrecke wird das durch die Objekte O1, 02 und die Übertragungsstrecken I1, I2 modifizierte Signal als erstes Übertragungsstreckenausgangssignal S22 ebenfalls in den Empfänger D eingespeist, wo sich die das erste Übertragungsstreckenausgangssignal S22 und das zweite Übertragungsstreckenausgangssignal S32 typischerweise summierend oder multiplizierend überlagern.

Im Folgenden schreiben wir zur Vereinfachung die Linearform zweier Signale A und B als LF(A,B). A, B, C seien beliebige Signale. α sei eine reelle Zahl.

Eine Linearform (LF) zweier Signale A(t) und B(t), die durch eine Linearformfunktion LF(A(t), B(t)) beschrieben wird und wie sie die erste Vorrichtung zur Bildung ihrer Ausgangssignale $yi_{ij}(t)$ durchführt, hat bezüglich der Linearformfunktion und eines dritten Signals C(t) und einer komplexen Konstante α folgende Eigenschaften:

$$LF(A(t) + B(t), C(t))=LF(A(t), C(t))+LF(B(t), C(t))$$

$$LF(\alpha*A(t), C(t))=\alpha*LF(A(t), C(t))$$

Zwei Signale A(t) und C(t) werden im Folgenden als orthogonal bezeichnet, wenn LF(A(t), C(t))=0 oder in der Realität LF(A(t), C(t))~0 gilt und A(t) und C(t) von Null verschieden sind.

Solange gilt: LF($s_{i,j}(t)$, $s_{kl}(t)$)=0 für i≠k oder j≠1, solange sind die $s_{i,j}(t)$ untereinander orthogonal. Daher wird der Regler nur die Anteile des ersten Übertragungsstreckenausgangssignals S22 ausregeln, die exakt einem vom Null verschiedenen Signal $s_{i,j}(t)$ entsprechen.

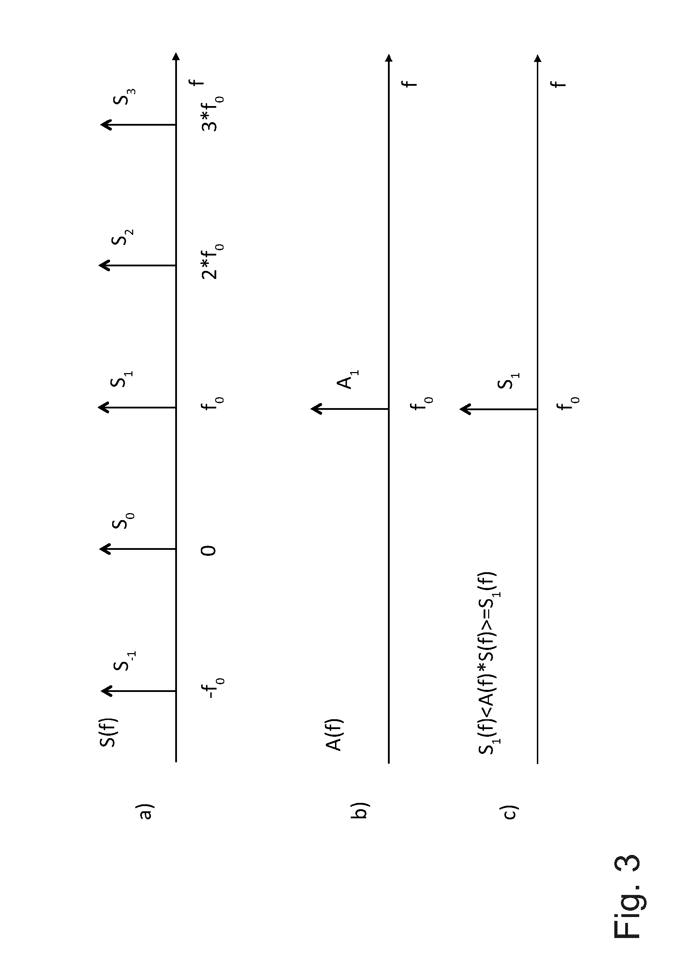

In Figur 3a sind vereinfacht mehrere Signalanteile $S_{-1}$ bis $S_3$ eines Signals S(t) gezeigt, wobei S(t) im Frequenzbereich als Signalbetragsspektrum S(f) dargestellt ist. Diese Signale entsprechen ausdrücklich nicht den Signalen S(-1) bis S3. Die Frequenzen der Signalanteile $S_{-1}$ bis $S_3$. sollen ganzzahlige Vielfache einer Grundfrequenz $f_0$ sein. Damit sollen diese Signalanteile $S_{-1}$ bis $S_3$ bezüglich der Linearform LF orthogonal zueinander sein. Wird nun ein Signal S(f), wie in Figur 3a dargestellt, als Empfängerausgangssignal S0(t) in das oben beschriebene Halios-System gemäß Figur 2 eingespeist, so ergibt eine beispielhafte Linearform LF(S0(t),$S_1$), die durch die erste Vorrichtung durchgeführt wird, dieses Signals S0(t), das hier ja das Signal S(t) sein soll, und eine Signalkomponente dieses Signals S0(t) bzw. S(t), hier beispielsweise die Komponente $S_1$, als A(f) bezeichnet (Figur 3b), einen Pegel, der nochmals multipliziert mit $S_1$(f) die Signalkomponente $S_1$(f) entsprechend ihrem Anteil in S0(t) reproduziert, aber eben keine Störungen. Die anderen Frequenzkanäle sprechen aufgrund der Orthogonalität der Signalanteile $S_{-1}$ bis $S_3$ nicht an, Figur 3b, 3c.

Ein solches System ist beispielsweise in der EP2631674A1 beschrieben. Das Problem eines solchen Systems ist, dass mehrere Objekte nur begrenzt getrennt werden können. Befinden sich zwei Objekte in einem Zeitschlitz entsprechend der EP2631674A1, so ist eine Trennung nicht möglich.

Ursache hierfür ist die in der EP2631674A1 geforderte Orthogonalität der Basissignale, die die Auflösung beschränkt. Dieses Problem taucht auch in Systemen gemäß DE102013013664 und DE102012024597 auf. Dort wird jeweils bereits ein Wavelet-Generator verwendet, ohne das Problem der Notwendigkeit von Zeitschlitzen wirklich zu lösen. Die DE10001943C2 offenbart eine technische Lehre, welche ebenfalls die Unterscheidung verschiedener Objekte mittels der dort offenbarten Messtechnik nicht ermöglicht.

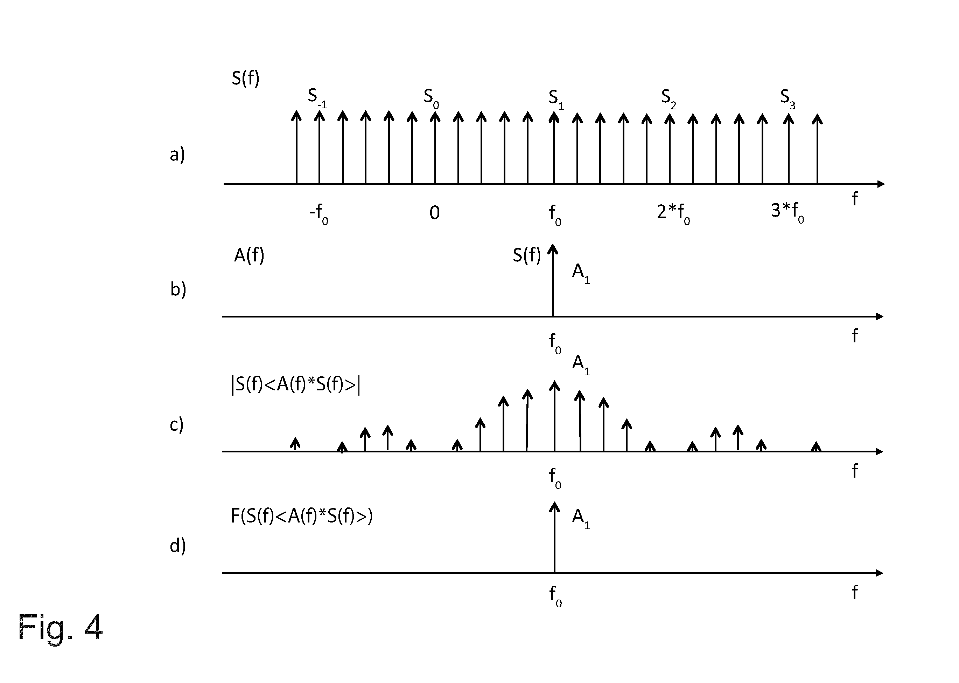

Verzichtet man jedoch auf die Orthogonalität der Wavelet-Signale $s_{i,j}$(t) des Wavelet-Generators (WG) zueinander, so sprechen immer mehrere i,j-Kanäle an. Dies ist in Figur 4a dargestellt. Hierbei sind die $S_{-1}$ bis $S_3$ aus Figur 3 nochmals eingezeichnet. Die zwischen den die $S_{-1}$ bis $S_3$ aus Figur 3 liegenden Signalkomponenten des Spektrums sind zusätzliche Wavelet-Signale $s_{i,j}$(t), wobei die Signale $S_{-1}$ bis $S_3$ aus Figur 3 ebenfalls zu diesen Wavelet-Signalen $s_{i,j}$(t) gehören. Sind die Wavelet-Signale $s_{i,j}$(t) dichter zueinander im Frequenzbereich erzeugt (Figur 4a), so sprechen bei Korrelation mit einem einzelnen Signal (Figur 4b) immer einige Seitenkanäle mit an (Figur 4c). In dem willkürlichen Beispiel ergibt sich eine Empfindlichkeit ähnlich dem Betrag einer si(f)-Funktion. Die Korrelation zu genau einem Wavelet-Signal ist bei einem Verlust der Orthogonalität also nicht mehr eindeutig. Diese Uneindeutigkeit ist der Kern des zu lösenden Problems.

Es ist somit Aufgabe der vorliegenden Erfindung, die im Stand der Technik bekannten Probleme der Erkennung einzelner Objekte bei Vorhandensein mehrerer Objekte weiter zu verbessern. Es ist somit das eigentliche Ziel der Erfindung, eine Erkennung mehrerer Objekte innerhalb einer optischen Übertragungsstrecke zu ermöglichen, ohne dass die Objekte sich in bestimmten räumlichen Bereichen befinden müssen, um getrennt werden zu können.

Gelöst wird die Aufgabe durch ein Sensorsystem mit den Merkmalen des Anspruchs 1.

Die bekannten Systeme versuchen die obigen Probleme und das Erkennen einzelner Objekte durch eine Orthogonalisierung mittels Zeitschlitzen zu lösen. Gemäß der vorliegenden Erfindung wird - auch bei nicht orthogonalen Wavelet-Signalen $s_{i,j}$(t) (Basissignalsatz) - ein Signal, das ein Objekt repräsentiert und das mit einem einzigen der Wavelet-Signale $s_{i,j}$(t) (Basissignale) korreliert wird, eindeutig wieder gefunden (Figur 4d). Die Erfindung, die nicht mehr an Zeitschlitze gebunden ist, ermöglicht somit eine höhere Auflösung als Systeme im Stand der Technik. Die Erfindung ist also insbesondere im Gegensatz zum Stand der Technik in der Lage, mit nicht-orthogonalen Basis-Signalen $s_{i,j}$(t), also einer untereinander nicht-orthogonalen Signal-Matrix $S_{i,j}$ des Wavelet-Generators (WG) bestehend aus den Wavelet-Signalen $s_{i,j}$(t) zu arbeiten.

Bei der Erfindung handelt es sich um ein Sensorsystem zur Erkennung mehrerer Objekte in einer Übertragungsstrecke. Diese Übertragungsstrecke besteht typischerweise aus einer ersten Übertragungsstrecke und einer zweiten Übertragungsstrecke. Die Objekte in der Übertragungsstrecke befinden sich typischerweise zwischen der ersten Übertragungsstrecke und der zweiten Übertragungsstrecke. Eine der Übertragungsstrecken kann dabei die Länge Null haben. Auch kann eine der Übertragungsstrecken selbst das Objekt repräsentieren, das vermessen werden soll. Die Übertragungsstrecken befinden sich zwischen dem Sender und einem Empfänger. Die Anordnung aus Figur 2 entspricht also insoweit dem Stand der Technik.

In der folgenden Beschreibung wird zwar vorauseilend an verschiedenen Stellen auf die Figuren zum besseren Verständnis bereits Bezug genommen, diese werden aber in der Figurenbeschreibung nochmals tiefergehend erläutert. Die Beschreibung ist also in ihrer Verallgemeinerung zu verstehen und nicht durch die dargestellten Elemente beschränkt.

Das erfindungsgemäße Sensorsystem umfasst mindestens einen Sender, der mit einem Speisesignal (S5) angesteuert wird und daraufhin ein bekanntes Sendesignal (S21) in die erste Übertragungsstrecke (I1) hinein sendet. Nach Durchgang durch mindestens einen Teil der ersten Übertragungsstrecke und Reflexion an einem Objekt oder Transmission durch ein Objekt gelangt das nun modifizierte Sendesignal über die zweite Übertragungsstrecke als modifiziertes Empfangssignal S22(t) zu dem Empfänger. Dabei weist das modifizierte Empfangssignal S22(t) einen modifizierten Empfangssignalanteil (S22e(t)) auf. Dieser modifizierte Empfangssignalanteil S22e(t) ist die Signalkomponente des modifizierten Sendesignals S22(t), die auf die Wirkungen der Transmission bzw. der Reflektion zurückzuführen ist. Da sie Teil des Empfangssignals S22(t) ist, ist sie in den Zeichnungen nicht eingezeichnet.

Aus dem Stand der Technik ist bekannt, dass der Empfänger (D) des Sensorsystems das von dem Sender (H) ausgesandte Sendesignal (S21) nach Modifikation durch Übertragungsstrecken (I, I1, 12) und Objekte (O) in den Übertragungsstrecken (I) empfängt. Typischerweise wird das Signal während dieser Übertragung an mindestens einem Objekt (O) reflektiert oder durch dieses Objekt hindurch transmittiert. Das reflektierte oder transmittierte Empfangssignal (S22) enthält dabei den modifizierten Empfangssignalanteil (S22e(t)), der das Echo-Signal repräsentiert. Aus dem Echo-Signal kann auf das Objekt und seine Entfernung oder Position geschlossen werden. Die erfindungsgemäße Vorrichtung kann daher auch diesen Empfangssignalanteil (S22e(t)) separieren.

Das Empfängerausgangssignal (S0(t)), das der Empfänger (D) ausgibt, enthält daher als Signalkomponente des Empfängerausgangssignals (S0(t)) einen modifizierten Ausgangssignalanteil (S0e(t)), der mit dem besagten modifizierten Empfangssignalanteil (S22e(t)) des Empfangssignals (S22(t)) korrespondiert. Diese Signalkomponente des Empfängerausgangssignals (S0(t)) ist als Signalanteil nicht in den Zeichnungen eingezeichnet. Sie korrespondiert zum modifizierten Empfangssignalanteil S22e(t) des transmittierten oder reflektierten Empfangssignals (S22).

Das erfindungsgemäße Sensorsystem umfasst des Weiteren eine erste Verarbeitungseinheit, die eine Linearform (LF) zweier Signale bildet. Bei diesen beiden Signalen handelt es sich zum ersten um ein Verarbeitungszwischensignal, das das Empfängerausgangssignal (S0) umfasst, oder um ein kompensiertes Empfängerausgangssignal (S1(t)) und zum zweiten um wenigstens ein Basissignal $s_{i,j}(t)$ (Wavelet). Die Verarbeitungseinheit kann beispielsweise einen Addierer A1 oder ein anderes Element umfassen, das eine Addition ausführt. Ist kein addierendes Element vorhanden, kann das Verarbeitungszwischensignal bzw. das kompensierte Empfängerausgangssignal S0(t) mit dem Empfängerausgangssignal des Empfängers identisch sein.

Durch die Berechnung der Linearform in der Verarbeitungseinheit (LF) werden die Ausgangssignalanteile separiert. Dabei wird typischerweise für jedes Basissignal $s_{i,j}(t)$ durch eine zugehörige Linearform (LF) aus dem Eingangssignal der Verarbeitungseinheit (beispielsweise das Verarbeitungszwischensignal oder das kompensierte Empfängerausgangssignal S1(t)) ein Signal einer Regelwert-Matrix ($YI_{i,j}$) in Form von entsprechenden Regelwert-Signalen ($y_{i,j}(t)$) erzeugt. Dies ist natürlich nur sinnvoll, wenn zumindest eines der Regelwert-Signale ($y_{i,j}(t)$) von Null verschieden ist.

Erfindungsgemäß weist das Sensorsystem einen Schätzer auf, der wenigstens eines der Regelwert-Signale ($y_{i,j}(t)$) selektiert. Obwohl aufgrund der fehlenden Orthogonalität in dem Empfangssignal auch Seitenbänder auftreten, wird auch das Signal empfangen und gemessen, das das Objekt repräsentiert. Der Schätzer ermittelt genau das Signal, das ein Objekt repräsentiert und das mit einem einzigen der Basissignale $s_{i,j}(t)$ (Wavelets) korreliert wird. Er ist also in der Lage das entsprechende Signal eindeutig wiederzufinden.

Darüber hinaus kann aus dem ermittelten Echo-Signal neben der Bestimmung der Entfernung eines Objekts zu dem Sensorsystem auch die Reflexionseigenschaft eines Objekts in der Übertragungsstecke und/oder die Transmissionseigenschaften der Übertragungsstrecke selbst bestimmt werden. Auf diese Weise lassen sich beispielsweise auch Eigenschaften eines Materials oder eines Stoffes in der Übertragungsstrecke bestimmen.

Somit sind letztlich mindestens eines der Regelwert-Signale ($y_{i,j}(t)$) oder ein daraus abgeleitetes Regelwert-Signal ($x_{i,j}(t)$, ($zi_{i,j}(t)$) ein Maß für eine Eigenschaft oder den Abstand des Objekts zu dem Sensorsystem oder ein Maß für eine Eigenschaft der Übertragungsstrecke selbst.

Bevorzugt ist der Schätzer deshalb als Maximum-Schätzer ausgebildet. In diesem Fall sucht der Schätzer den Maximalwert der Regelwert-Signale ($yi_{i,j}(t)$). Aus dem Regelwert-Signal kann dann ein Rückschluss auf das Objekt und/oder auf die Entfernung des Objekts zu dem Sensorsystem gezogen werden.

Durch Anwendung eines Schätzers ist es daneben auch möglich, mehrere Objekte zu unterscheiden und die Objekte und ihre Entfernungen zu dem System zu ermitteln. Daneben kann bevorzugt auch das Vorhandensein weiterer Objekte erkannt werden, deren Entfernung zum Sensorsystem jedoch nicht ermittelt wird. Hierzu wird bevorzugt das Echo-Informationssignal (EInf) verwendet, das ausgegeben und/oder weiterverarbeitet werden kann.

In einer bevorzugten Ausführungsform umfasst das Sensorsystem einen Referenzspeicher (MRef), in dem Regelwert-Signale einer Referenzmessung gespeichert werden. Bevorzugt wird der Schätzer von einem der Regelwert-Signale aus dem Referenzspeicher gespeist. Dieses Referenz-Regelwert-Signal kann dann zu dem aktuellen Regelwert-Signal in dem Schätzer in Beziehung gesetzt werden, beispielsweise durch Quotientenbildung oder durch Subtraktion.

Daneben können bevorzugt nicht nur die Regelwert-Signale ($yi_{i,j}(t)$), sondern auch oder statt dessen auf diesen Regelwert-Signalen ($y_{i,j}(t)$) basierende weiterverarbeitete Signale in dem Schätzer verarbeitet werden. Bevorzugt sind die weiterverarbeiteten Signale Ausgangssignale eines im Signalpfad hinter der Verarbeitungseinheit angeordneten Filters oder Integrators. Optional können die weiterverarbeiteten Signale auch für jedenfalls einen oder mehrere Zeitpunkte zwischengespeichert werden, beispielsweise in einem ersten oder zweiten Speicher.

In einer bevorzugten Ausführungsform erzeugt der Wavelet-Generator wenigstens zwei Wavelets als Basissignale. Je zwei Wavelets bilden ein Paar, das aus einer "Sinusfunktion" und einer dazu orthogonalen "Cosinusfunktion" besteht. In der Verarbeitungseinheit werden bevorzugt Fourier-Koeffizienten gebildet. Dies erfolgt mittels der Linearform der Verarbeitungseinheit, die bevorzugt eine Multiplikation des Bearbeitungszwischensignals mit der jeweiligen "Cosinusfunktion" oder "Sinusfunktion" und anschließender Integration ausgeführt wird. In dem Schätzer findet vorzugsweise eine Quotientenbildung von Referenz-Fourier-Koeffizienten und aktuell ermittelten Fourier-Koeffizienten statt. Die Referenz-Fourier-Koeffizienten können dabei in einem Referenzspeicher (MRef) zwischengespeichert werden. Sie sind in einer Referenzmessung vor der eigentlichen Messung mittels eines Referenzsenders und der Verarbeitungseinheit erzeugt worden. Der Referenzsender wird in der Referenzmessung mit einem bekannten Basissignal gespeist, vorzugsweise einem Wavelet-Signal, das über eine bekannte Übertragungsstrecke direkt zu dem Empfänger gelangt.

In dieser bevorzugten Ausführungsform wird das Echo-Signal in einer IFFT-Einheit mittels einer inversen Fourier-Transformation aus dem Ausgangssignal des Schätzers gebildet. Optional kann die IFFT-Einheit in dem Schätzer integriert sein. Diese Ausführungsform zeigt also ein Beispiel des erfindungsgemäßen Sensorsystems bei einer Verarbeitung im Frequenzbereich.

In einer bevorzugten Ausführungsform verfügt das erfindungsgemäße Sensorsystem zusätzlich über einen Filter, bevorzugt über einen nicht-linearen Filter (NLF). Dieser Filter wandelt typischer Weise alle oder zumindest einen Teil dieser Regelwert-Signale ($y_{i,j}(t)$) (oder andere aus diesen Regelwert-Signalen abgeleitete andere mögliche Eingangssignale des (nicht-linearen) Filters (NLF-Eingangssignale) ($y_{i,j}(tn)$, $x_{i,j}(t)$, $z_{i,j}(t)$), die später erläutert werden) zu Ausgangssignalen $nf_{i,j}(t)$ des Filters, bevorzugt des nicht-linearen Filters (NLF-Ausgangssignale), um. Dabei selektiert er bevorzugt durch einen nichtlinearen Prozess einige wenige der Regelwert-Signale ($yi_{i,j}(t)$). Alternativ können auch andere aus diesen Regelwert-Signalen abgeleitete Eingangssignale des nicht-linearen Filters (NLF-Eingangssignale), wie beispielsweise $y_{i,j}(tn)$, $x_{i,j}(t)$, $z_{i,j}(t)$, die später erläutert werden, selektiert werden. Natürlich muss das Sensorsystem mindestens eine Einheit (z.B. einen Wavelet-Generator WG) umfassen, die zumindest ein Speisesignal (S5) zur Speisung des Senders erzeugt. Ebenso muss das Sensorsystem mindestens eine Einheit umfassen, die ein Kompensatorspeisesignal (S3) zur Speisung eines Kompensators bzw. Kompensationssenders (K) erzeugt.

Es bestehen dabei grundsätzlich zwei Möglichkeiten für die Regelung der Sensorsystemstabilität. Zum Einen kann das Sendesignal (S5) geregelt werden und zum Anderen das Kompensatorspeisesignal (S3). Eine Kombination von beiden Verfahren nach einem Regelalgorithmus ist natürlich immer möglich.

Das erfindungsgemäße Sensorsystem weist eine Rücktransformations-Einheit auf, die aus zumindest einem Teil der Regelwertsignale ($y_{i,j}(t)$) eine Senderücktransformation (SRT) durchführt und das Speisesignal (S5) erzeugt. Zusätzlich oder alternativ führt die Rücktransformations-Einheit aus wenigstens einem Teil der Regelwertsignale eine Kompensationsrücktransformation (KRT) durch und erzeugt das Kompensationssignal (S3). Hierbei erfolgt die Rückführung des Kompensationsspeisesignals in das Sensorsystem hinein, so dass am Eingang der Verarbeitungseinheit (LF), die eine Linearform umfasst, ein kompensiertes Empfängerausgangssignal (Verarbeitungszwischensignal) anliegt. Auf die Verarbeitungseinheit (LF) mit der Linearform wird noch eingegangen.

Somit umfasst bevorzugt das Sensorsystem eine Einheit, die eine Senderücktransformation (SRT) durchführt, die aus zumindest einem Teil der Regelwertsignale ($y_{i,j}(t)$) oder der Schätzer-Eingangssignale oder aus diesen abgeleiteten Signalen ($inf_{i,j}(t)$, $S4_{i,j}(t)$), die später erläutert werden, das Speisesignal (S5) erzeugt und/oder eine Einheit, die eine Kompensationsrücktransformation (KRT) durchführt, die aus zumindest einem Teil der Schätzer-Eingangssignale oder aus diesen abgeleiteten Signalen ($inf_{i,j}(t)$, $S4_{i,j}(t)$), die später erläutert werden, ein Kompensatorspeisesignal (S3) erzeugt.

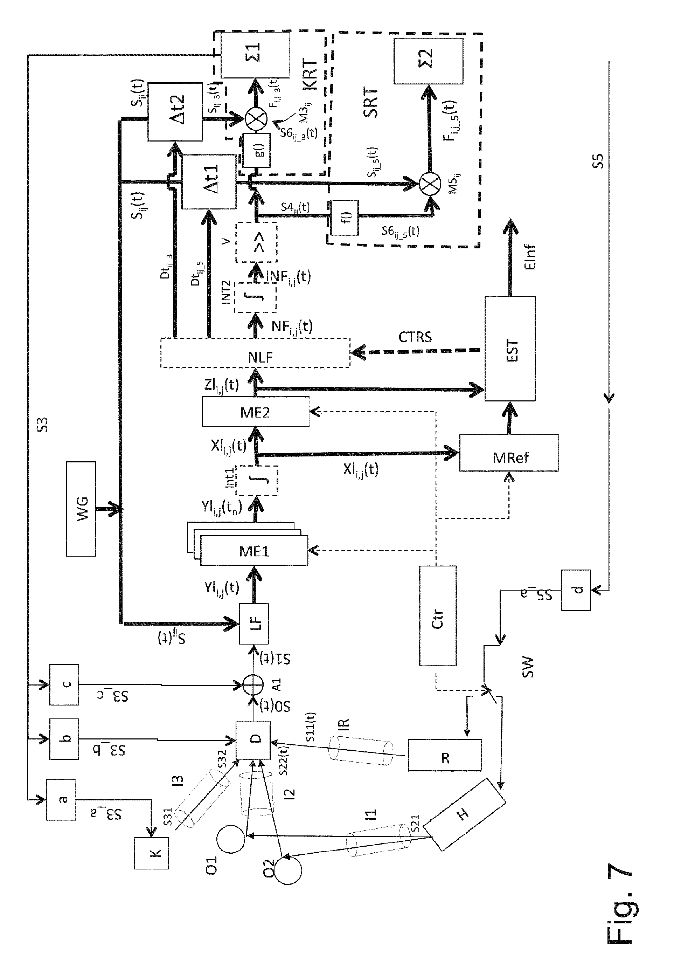

Wie bei anderen Halios-System ist eine Rückführung des Kompensatorspeisesignals (S3) Teil des Systems. Für diese Rückführung bestehen grundsätzlich drei Möglichkeiten. Die Möglichkeiten sind alle beispielhaft in Figur 7 gezeigt. Dabei wird ausdrücklich daraufhin gewiesen, dass jede der Kompensationsmöglichkeiten einzeln oder in einer beliebigen (hier nicht dargestellten) Kombination auftreten kann. Im Einzelnen sind die drei Möglichkeiten:

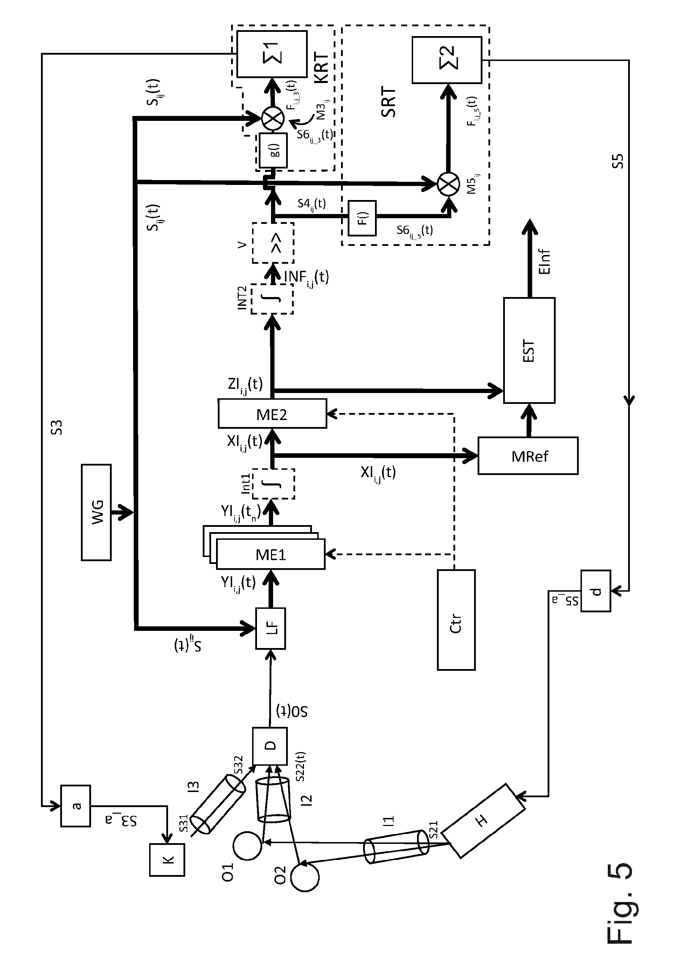

Zum Ersten kann die Rückführung des Kompensatorspeisesignals (S3) als erstes Kompensatorsignal (S3_a) (siehe z.B. Figur 5) verstärkt und/oder gefiltert mit einer ersten Kompensationsfilterfunktion a(S3) über einen Kompensationssender (K) und eine dritte Übertragungsstrecke (13), wie bereits beschrieben, summierend überlagernd oder multiplizierend überlagernd im Empfänger (D) erfolgen. Typischerweise erfolgt diese Überlagerung im Empfänger D summierend, wenn dieser linear arbeitet. Sofern dieser eine nicht-lineare Empfindlichkeitskennlinie besitzt, können beispielsweise höhere Terme einer Taylor-Entwicklung ausgenutzt werden, um die Multiplikation zu realisieren. Die nachfolgende Linearform (LF) wird dann beispielsweise nicht mit einem Signal $s_{i,j}(t)$ sondern mit einem Signal $s_{i,j}(t)^2$ durchgeführt. Zum Zweiten kann die Rückführung des Kompensatorspeisesignals (S3) als zweites Kompensatorsignal (S3_b) (siehe z.B. Figur 7) verstärkt und/oder gefiltert mit einer zweiten Kompensationsfilterfunktion b(S3) summierend überlagernd oder multiplizierend überlagernd direkt in den Empfänger (D) hinein erfolgen.

Zum Dritten kann die Rückführung des Kompensatorspeisesignals (S3) als drittes Kompensatorsignal (S3_c) (siehe z.B. Figur 7) verstärkt und/oder gefiltert mit einer dritten Kompensationsfilterfunktion c(S3) summierend in einem Addierer (A1) mit dem Empfängerausgangssignal S0(t) zum kompensierten Empfängerausgangssignal S1(t) erfolgen.

Wie bei allen Halios-System werden dabei die Vorzeichen und Verstärkungen und Übertragungsfunktionen aller Elemente so gewählt, dass sich im Regelkreis des Sensorsystems Stabilität ergibt. Hierunter versteht der Fachmann, dass das System so geregelt wird, dass am Ausgang des Empfänger im Wesentlichen (bis auf einen Regelfehler oder das Systemrauschen) ein Gleichsignal anliegt, bevorzugt ein Nullsignal. Typischerweise ist dann mindestens ein Wert der Regelwert-Matrix $YI_{i,j}(t)$ eine charakteristische Größe für wenigstens einen von n x m möglichen Ausgangssignalanteilen.

Ein weiteres Charakteristikum des erfindungsgemäßen Sensorsystems ist, dass das Sensorsystem über einen Wavelet-Generator (WG) verfügt, der bevorzugt Wavelets in der beispielhaften Definition des Buches von Stéphane Mallat, "A Wavelet Tour of Signal Processing" Academic Press London 1997 erzeugt.

Danach erzeugt beispielsweise der Wavelet-Generator (WG) bevorzugt aus mindestens einem Ur-Wavelet ($s_{1,1}(t)$) das Basissignal, das periodisch mit einer Ur-Wavelet-Periode (P) ist, wobei eine Ur-Wavelet-Periode (P) die Länge unendlich haben kann.

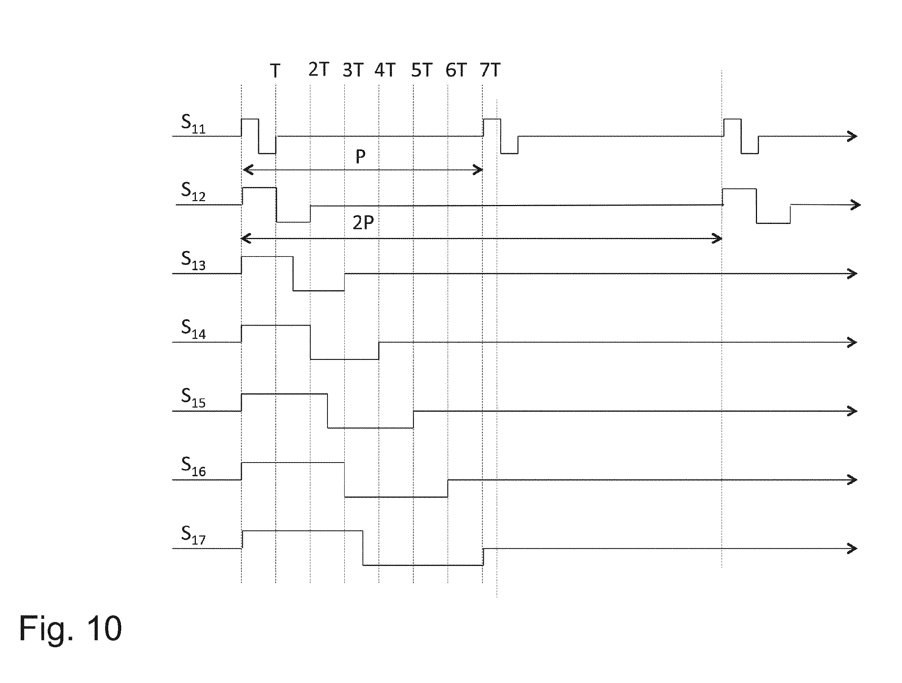

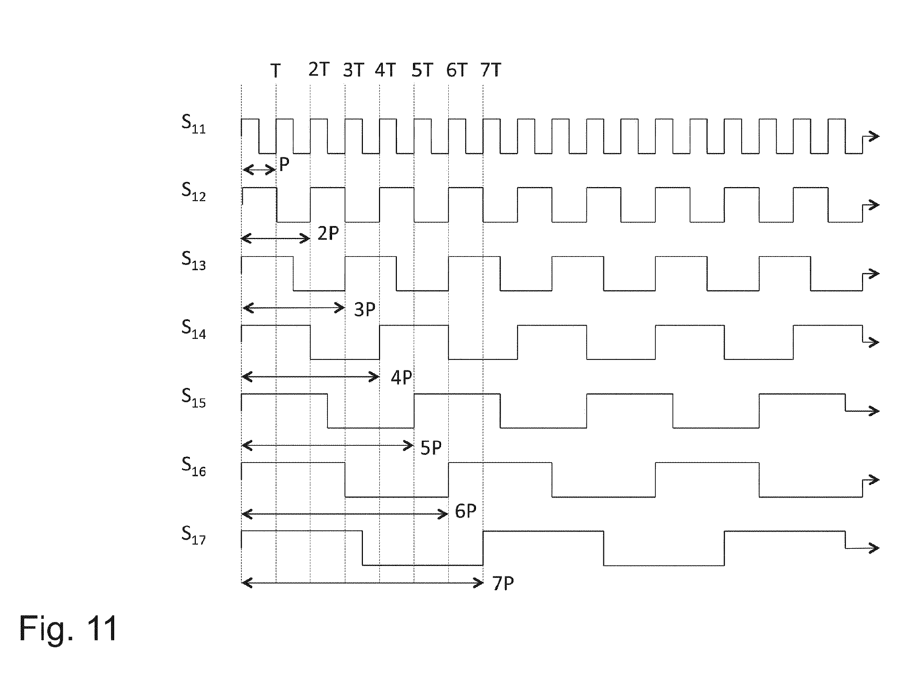

Bei mehreren Wavelet-Generatoren, beispielsweise zwei Wavelet-Generatoren, erzeugen diese aus mindestens einem - möglicherweise Wavelet-Generator spezifischen - Ur-Wavelet ($s_{1,1\_a}(t)$) $s_{1,1\_b}(t)$) (siehe z.B. Figur 10) ein jeweiliges Basissignal, das periodisch mit einer (möglicherweise spezifischen) Ur-Wavelet-Periode (Pa, Pb) ist, wobei auch hier eine oder mehrere dieser Ur-Wavelet-Perioden (Pa, Pb) die Länge unendlich haben können. Die Wavelets sind hierdurch zueinander zeitlich um den Abstand der Periode P bzw. Pa und Pb beabstandet, wie in Figur 11 gezeigt.

Neben diesem Abstand weisen aber die Wavelets auch noch eine zeitliche Länge T bzw. Ta, Tb auf. (siehe Figur 10). Typischer Weise wird daher das Sensorsystem mit einer Systemperiode der Periodenlänge (T, Ta, Tb) oder einer gemeinsamen Systemperiodendauer, die ein kleinstes gemeinsames Vielfaches dieser Periodenlängen ist. Die Periodenlänge (T, Ta, Tb) braucht dabei nicht für jede Periode gleich sein. Auch kann die Periodenlänge (T, Ta, Tb) einen beliebigen Wert haben, der den Wert unendlich einschließt und von der Periodenlänge 0 verschieden ist. Bevorzugt erzeugt der Wavelet-Generator (WG) n x m aus dem Ur-Wavelet generierte periodische Tochter-Wavelets ($s_{i,j}(t)$, $si, j_{i,j\_a}(t)$ $si, j\_b(t)$ mit $1<i<n$, $1<j<m$) oder zumindest eine Teilmenge dieser Tochter-Wavelets ($s_{i,j}(t)$, $s_{i,j\_a}$, $s_{i,j\_b}$ mit $1<i<n$, $1<j<m$), die beispielsweise gegenüber dem jeweiligen Ur-Wavelet ($s_{1,1}(t)$, $s_{1,1\_a}(t)$ $s_{1,1\_b}(t)$) zeitlich um einen Faktor gestaucht oder gestreckt sind. Dieser Faktor kann beispielsweise der Faktor $1/j$ oder $j$, aber auch 1 oder eine reelle Zahl sein. Gleichzeitig können die Tochter-Wavelets um einen zweiten Faktor gegenüber dem korrespondierenden Wavelet $s_{1,j}(t)$ bzw. $s_{1,j\_a}(t)$ bzw. $s_{1,j\_b}(t)$ verzögert sein. Dieser zweite Faktor kann unter anderem beispielsweise der Faktor $(n-1)*T/j$ bzw. $(n-1)*Ta/j$ bzw. $(n-1)*Tb/j$ oder $(n-1)*T*j$ bzw. $(n-1)*Ta*j$ bzw. $(n-1)*Tb*j$ sein. Ein alternativer zweiter Faktor wäre beispielsweise der Faktor $(n-1)*T$ bzw. $(n-1)*Ta$ bzw. $(n-1)*Tb$.

Die Tochter-Wavelet-Periode kann bevorzugt ebenfalls angepasst werden. Eine typische Tochter-Wavelet-Periode hat beispielsweise eine Periodenlänge von $P/j$ bzw. von $Pa/j$ bzw. von $Pb/j$ oder $P*j$ bzw. $Pa*j$ bzw. bzw. $Pb*j$. Hinsichtlich der Theorie der Wavelets sei hier, wie auch anderer Stelle, auf die einschlägige Literatur, beispielsweise Stéphane Mallat, "A Wavelet Tour of Signal Processing" Academic Press London 1997 verwiesen. Dies sind also nur Beispiele der vielfältigen mögliche Wavelets, die hier denkbar sind.

Ein wesentliches Element des Sensorsystems ist die Verarbeitungseinheit, die die notwendige Linearform (LF) erzeugt. Mit Hilfe der jeweils stets gleichartigen Linearform (LF) wird durch die Verarbeitungseinheit das Verarbeitungszwischensignal, welches das Empfängerausgangssignal oder das kompensierte Empfängerausgangssignal umfasst, mit jeweils einem der Wavelets ($s_{i,j}(t)$ $s_{i,j\_a}(t)$) verknüpft (Verknüpfung). Das Ergebnis dieser n x m möglichen Verknüpfungen ist eine erste Regelwert-Matrix $YI_1$ in Form der ersten Regelwert-Signale $yi_{1\_i,j}$. In den Zeichnungen ist als Ausgang der Linearform stets nur das Regelwert-Signal $yi_{i,j}(t)$ als $YI_{i,j}(t)$ eingezeichnet. Dieses repräsentiert eine oder mehrere der hier und im Folgenden erläuterten möglichen Regelwert-Signale $yi_{1\_i,j}$ bis $yi_{6\_i,j}$.

Eine bevorzugte alternative Form der Verknüpfung, die ebenfalls eine Linearform ist, ist eine einfache Multiplikation. Die Verarbeitungseinheit verknüpft mit Hilfe einer Multiplikation das Verarbeitungszwischensignal mit jeweils einem der Wavelets $s_{i,j}(t)$. Das Ergebnis dieser n x m möglichen Verknüpfungen ist wieder eine zweite Regelwert-Matrix $YI_2$ ($YI_{2\_i,j}$) in Form der zweiten Regelwert-Signale $yi_{2\_i,j}(t)$.

Eine bevorzugte Erweiterung dieser Methode ist die Bildung der Linearform mit Hilfe jeweils einer Multiplikation gefolgt von einer Filterung oder Integration. Dabei wird zunächst das Verarbeitungszwischensignal mit jeweils einem der besagten Wavelets $s_{i,j}(t)$ multipliziert und anschließend mittels eines Filters, insbesondere eines Tiefpasses, gefiltert oder mittels eines Integrators integriert. Dabei ist das Ergebnis dieser n x m möglichen Verknüpfungen wieder eine dritte Regelwert-Matrix $YI_3$ ($YI_{3\_i,j}$) in Form der dritten Regelwert-Signale $yi_{3\_i,j}(t)$.

Genaugenommen ist die zuvor beschriebene Form nichts anderes als ein Skalar-Produkt. Somit kann auch mit Hilfe jeweils eines stets gleichartigen Skalar-Produkts das Verarbeitungszwischensignal (Empfängerausgangssignal oder das kompensierte Empfängerausgangssignal) mit jeweils einem der Wavelets $s_{i,j}(t)$ verknüpft werden. In diesem Falle ist das Ergebnis dieser n x m möglichen Verknüpfungen eine vierte Regelwert-Matrix $YI_4$ ($YI_{4\_i,j}$) in Form der vierten Regelwert-Signale $yi_{4\_i,j}$ ($yi_{4\_i,j}(t)$).

Als vorletztes sei an dieser Stelle nochmals erwähnt, dass bevorzugt jeweils ein stets gleichartiger Korrelationsfilter das Verarbeitungszwischensignal wiederum mit jeweils einem der Wavelets $s_{i,j}(t)$ verknüpfen kann. Das Ergebnis dieser n x m möglichen Verknüpfungen ist in diesem Falle eine fünfte Regel-wert-Matrix $YI_5$ ($YI_{5\_i,j}$) in Form der fünften Regelwert-Signale $yi_{5\_i,j}$ ($yi_{5\_i,j}(t)$).

Als letztes sei an dieser Stelle nochmals erwähnt, dass bevorzugt jeweils ein stets gleichartiger Matched-Filter das Verarbeitungszwischensignal (Empfängerausgangssignal oder das kompensierte Empfängerausgangssignal) mit jeweils einem der Wavelets $s_{i,j}(t)$ verknüpfen kann. Hierbei müssen die Wavelets $s_{i,j}(t)$ allerdings vordefiniert sein. Der Matched-Filter ist also jeweils so konstruiert, dass er nur das jeweilige Wavelet $s_{i,j}(t)$ (oder dessen Zusammenstellungen) durchlässt und die anderen Wavelets (oder Zusammenstellungen) derselben sperrt. Das Ergebnis dieser n x m möglichen Verknüpfungen ist in diesem Falle eine sechste Regelwert-Matrix $YI_6$ ($YI_{6\_i,j}$) in Form der sechsten Regelwert-Signale $yi_{6\_i,j}$ ($yi_{6\_i,j}(t)$).

Wie oben bereits mehrfach ausgeführt, ist es in der Praxis typischer Weise nicht notwendig, dass alle möglichen n x m Verknüpfungen oder n x m Multiplikationen oder n x m Skalar-Produkte etc. notwendiger Weise tatsächlich ausgeführt werden müssen. So ist typischer Weise auch nicht jeder der n x m möglichen Korrelationsfilter vorhanden. Es kann also sein, dass einzelne der n x m Signale zu Null gesetzt werden oder weggelassen werden.

Zur Vereinfachung wird im Folgenden allgemein von $yi_{i,j}$ oder $yi_{i,j}(t)$ gesprochen, wobei beide Bezeichnungen das gleiche bezeichnen. Es ist damit stets eine der zuvor beschriebenen Formen $yi_{1\_i,j}$, $yi_{2\_i,j}$, $yi_{3\_i,j}$, $yi_{4\_i,j}$, $yi_{5\_i,j}$, $yi_{6\_i,j}$ oder eine Kombination derselben gemeint, ohne diese näher zu spezifizieren. Dies betrifft auch die Ansprüche.

Ebenso wird zur weiteren Vereinfachung im Folgenden allgemein von YI gesprochen. Es ist damit stets eine der zuvor beschriebenen Signalmatrizen $YI_1$, $YI_2$, $YI_3$, $YI_4$, $YI_5$, $YI_6$ oder eine Kombination derselben gemeint, ohne diese näher zu spezifizieren. Dies betrifft auch die Ansprüche.

In vielen technischen Realisierungen kommt es vor, dass das erfindungsgemäße Sensorsystem einen erster Speicher (ME1) einschließt, der bevorzugt mindestens eines der Regelwert-Signale ($yi_{i,j}$) für zumindest einen Speicherzeitpunkt ($t_n$) enthält. Die gespeicherten Regelwert-Signale $yi_{i,j}(t_n)$ (auch als $yin_{i,j}$ bezeichnet) sind in der gespeicherten Regelwert-Matrix $YI_{i,j}(t_n)$, die im Folgenden auch als $YIn_{i,j}$ bezeichnet wird, zusammengefasst.

Eine andere Realisierung weist bevorzugt mindestens einen ersten Integrator (INT1) auf, der mindestens eines der Regelwert-Signale ($y_{i,j}(t)$) und/oder mindestens eines der gespeicherten Regelwert-Signale $yi_{i,j}(t_n)$ integriert oder eine äquivalente Funktion ausführt. Dessen Ausgangssignalmatrix $XI_{i,j}$ wird im Folgenden auch als Matrix der integrierten Regelwert-Signale $xi_{i,j}(t)$ der ersten Integrationseinheit INT1 bezeichnet. Der Integrator hat dabei typischerweise die Aufgabe, die Regelfehler zu minimieren.

In einer weiteren bevorzugten Realisierung weist das erfindungsgemäße System mindestens einen zweiten Speicher (ME2) auf, der beispielsweise mindestens eines der Regelwert-Signale ($yi_{i,j}$) und/oder eines der gespeicherten Regelwert-Signale ($yi_{i,j}(t_n)$) und/oder eines der integrierten Regelwert-Signale ($xi_{i,j}(t)$) für zumindest einen Speicherzeitpunkt ($t_m$) enthält.

Der erfindungsgemäße Schätzer, der das erfindungsgemäße System von den Systemen im Stand der Technik unterscheidet, kann verschiedene Eingangssignale haben. Eines dieser Eingangssignale kann beispielsweise sein:

- ein gespeichertes Regelwert-Signal ($yi_{i,j}(t_n)$) (Ausgangssignal), das zu einem Speicherzeitpunkt $t_n$ in der ersten Speichereinheit ME1 gespeichert wird,

- ein integriertes Regelwert-Signal ($xi_{i,j}(t)$) als Ausgangssignal der ersten Integrationseinheit INT1,

- ein Ausgangssignal (Regelwert-Signal) ($zi_{i,j}(t_m)$) des zweiten Speichers ME2, das zu einem Speicherzeitpunkt $t_m$ in dem zweiten Speicher ME2 gespeichert wird.

In einer bevorzugten Ausführungsform des erfindungsgemäßen Systems werden die Eingangssignale des Schätzers weiterverarbeitet, bevor sie der Rücktransformations-Einheit zugeführt werden. Von den Eingangssignalen kann beispielsweise eines oder mehrere in einem zweiten Integrator (INT2) integriert werden. Diese integrierte Ausgangssignale $inf_{i,j}(t)$ des Filters sind wiederum Teil der integrierten Ausgangssignalmatrix $INF_{i,j}$ der zweiten Integratoreinheit (INT2). Auch diese zweite Integratoreinheit (INT2) hat typischerweise die Aufgabe, den Regelfehler zu minimieren.

In einer weiteren bevorzugten Ausführungsform des Sensorsystems wird beispielsweise eines der Schätzer-Eingangssignale und/oder eines der integrierten Ausgangssignale ($inf_{i,j}(t)$) der zweiten Integratoreinheit (INT2) durch einen Verstärker (V) verstärkt. Dessen Ausgangssignale ($S4_{i,j}(t)$) sind wiederum Teil der Ausgangssignalmatrix der Verstärkereinheit V, bevor sie zur Rücktransformations-Einheit gelangen.

In einer besonderen Ausführung des erfindungsgemäßen Systems weist das System neben dem Schätzer auch einen nicht-linearen Filter (NLF) auf. Dessen Ausgangssignale $nf_{i,j}(t)$ sind die Teil der Ausgangssignalmatrix $NF_{i,j}$ des nicht-linearen Filters (NLF). Anstelle der Schätzer-Eingangssignale werden dann typischerweise die Ausgangssignale $nf_{i,j}(t)$ in dem zweiten Integrator (INT2) und/oder dem Verstärker (V) weiterverarbeitet.

Die Rücktransformations-Einheit des erfindungsgemäßen Sensorsystems umfasst in einer bevorzugten Ausführungsform eine Senderücktransformation (SRT) mittels der das Speisesignal (S5) des Senders (H) erzeugt wird. Ein Multiplikator ($M5_{ij}$) (Multipliziereinheit) multipliziert ein mit einer Filterfunktion (f()) in einem Filter gefiltertes Ausgangssignal des nicht-linearen Filters mit einem zugeordneten Wavelet $s6_{i,j\_5}(t)$ zu einem Rohsendesignal ($F_{i,j\_5}(t)$). Das Ausgangssignal des nicht-linearen Filters kann integriert und/oder verstärkt sein. Die Wavelets können beispielsweise verzögert sein. Ein zweiter Summierer ($\Sigma 2$) erzeugt bevorzugt aus allen diesen Rohsendesignalen ($F_{i,j\_5}(t)$) durch Summierung das Speisesignal (S5). Es ist für den Fachmann offensichtlich, dass in dem Fall, wenn die Filterfunktion (f()) eine Konstante für ein einzelnes zugeordnetes Wavelet $s6_{i,j\_5}(t)$ liefert, und alle anderen zugeordneten Wavelets $s6_{k,l\_5}(t)$, mit $k \neq i$ oder $i \neq j$, gleich null gesetzt werden, das Sendesignal S5 gleich dem jeweiligen zugeordneten Wavelet $s6_{i,j\_5}(t)$ ist.

Bevorzugt können also folgende Signale in der Senderücktransformation (SRT) verarbeitet werden:

Ein Eingangssignal ($S4_{i,j}(t)$) des Filters ($f()$) der Senderücktransformation SRT kann das Verstärkerausgangssignal und/oder das integrierte Ausgangssignal und/oder das Schätzer-Eingangssignal oder das Ausgangssignal des Filters bzw. des nicht-linearen Filters (NLF) sein. Das jeweils gefilterte Signal ($S6_{i,j\_5}(t)$) wird dem Multiplikator ($M5_{ij}$) zugeführt. Hier wird es mit einem zugeordneten Wavelet ($s_{i,j}(t)$, $s_{i,j\_b}(t)$ oder verzögerten Wavelet ($S_{i,j\_5}(t)$) (bei Vorhandensein des zusätzlichen nicht-linearen Filters) multipliziert.

Es wird das Rohsendesignal ($F_{i,j\_5}(t)$), auch Speisevorsignal genannt, gebildet. Die Rohsendesignale werden in dem Summierer ($\Sigma 2$) zu dem Speisesignal (S5) des Senders summiert.

Die Filterfunktion ($f()$) kann für ein oder mehrere der Ausgangssignale, unabhängig von dem Eingangssignal des Filters (Verstärkerausgangssignal ($S4_{i,j}(t)$), integriertes Ausgangssignal ($inf_{i,j}(t)$), Schätzer-Eingangssignal ($zi_{i,j}(t)$), Ausgangssignal des nicht-linearen Filters ($nf_{i,j}(t)$)), dabei ausdrücklich auch eine Konstante sein. Auch müssen nicht alle Rohsendesignale ($F_{i,j\_5}(t)$) gebildet werden. Dies kann bedeuten, dass sie auf einen festen Wert, beispielsweise 1 oder 0, gesetzt oder weggelassen werden können.

Ähnliches gilt für die Erzeugung des Kompensatorspeisesignals (S3). Die Rücktransformations-Einheit umfasst in diesem Fall bevorzugt eine Kompensationsrücktransformation (KRT) mit einer dritten Multipliziereinheit ($M3_{ij}$).

In einer weiteren bevorzugten Ausführungsform des Sensorsystems umfasst die Rücktransformations-Einheit die Kompensationsrücktransformation (KRT) mittels der das Kompensationssendesignal (S3) des Kompensators erzeugt wird.

Die der Senderrücktransformation (SRT) entsprechende Kompensationsrücktransformation (KRT) umfasst bevorzugt die dritte Multipliziereinheit ($M3_{ij}$), die bevorzugt eines der obengenannten Signale nach Filterung in einem Filter mit einer Filterfunktion ($g()$) mit einem zugeordneten Wavelet-Signal $s_{i,j}(t)$ zu einem Rohkompensationssignal ($F_{i,j\_3}(t)$) multipliziert. Die jeweiligen Rohkompensationssignale ($F_{i,j\_3}(t)$) werden als Ausgangssignale in einem (ersten) Summierer ($\Sigma 1$) zu dem Kompensationssendesignal (S3) summiert.

Bevorzugt wird also in der dritten Multipliziereinheit ($M3_{ij}$) der Kompensationsrücktransformation (KRT) ein mit einer Filterfunktion ($g()$) gefiltertes Eingangssignal mit je einem zugeordneten Wavelet-Signal ($s_{i,j}(t)$) zu dem Rohkompensationssignal $F_{i,j\_3}(t)$ multipliziert. Der erste Summierer ($\Sigma 1$) erzeugt aus allen diesen Rohkompensationssignalen ($F_{i,j\_3}(t)$) durch Summierung das Kompensationssendesignal (S3). Als Eingangssignal des Filters wird das Schätzereingangssignal ($zi_{i,j}(t)$) und/oder das Verstärkerausgangssignal ($S4_{i,j}(t)$) und/oder das integrierte Ausgangssignal des zweiten Integrators ($inf_{i,j}(t)$) und/oder Ausgangssignal des nicht-linearen Filters ($nf_{i,j}(t)$) verwendet.

Die Filterfunktion $g()$ kann dabei ausdrücklich auch eine Konstante bilden, so dass das Ausgangssignal (S6) je eine Konstante ist. Auch müssen nicht alle Rohkompensationssignale ($F_{i,j\_3}(t)$) gebildet werden. Dies kann bedeuten, dass sie auf einen festen Wert, beispielsweise 1 oder 0, gesetzt oder weggelassen werden können.

Selbstverständlich kann die Rücktransformations-Einheit des erfindungsgemäßen Sensorsystems sowohl die Senderrücktransformation (SRT) als auch die Kompensationsrücktransformation (KRT) umfassen.

In einer weiteren bevorzugten Ausführungsform des erfindungsgemäßen Sensorsystems mit einem optionalen zusätzlichen nicht-linearen Filter (NLF) steuert der nicht-lineare Filter (NLF) zumindest die Verzögerung eines der Wavelets ($s_{i,j}(t)$) zu zumindest einem verzögerten ersten Wavelet ($s_{i,j\_5}(t)$) durch eine erste Verzögerungsvorrichtung ($\Delta t1$) und/oder die Verzögerung mindestens eines der Wavelets ($s_{i,j}(t)$) zu zumindest einem verzögerten zweiten Wavelets ($s_{i,j\_3}(t)$) durch eine zweite Verzögerungsvorrichtung ($\Delta t2$). Statt einer Verzögerungseinrichtung kann es sich dabei bevorzugt jeweils auch um einen Phasenschieber handeln. Daher wird der Begriff "Verzögerungseinrichtung" im Folgenden als Synonym für eine Einrichtung verwendet, die eine gesteuerte Verzögerung und/oder eine gesteuerte Phasenschiebung verursacht. Diese Verwendung gilt auch für die Ansprüche.

In einer weiteren bevorzugten Ausführungsform des erfindungsgemäßen Sensorsystems wird mindestens ein Speisesignal (S5) und/oder mindestens ein Kompensationssendesignal (S3) mit einem Offset versehen.

In einer weiteren bevorzugten Ausführungsform des Sensorsystems befindet sich mindestens ein linearer Filter und/oder mindestens ein erster Integrator (INT1) im Signalpfad nach der Verarbeitungseinheit (LF) mit der Linearform und bevorzugt vor dem Eingang des Schätzers und weiter bevorzugt vor dem optionalen nicht-linearen Filter (NLF).

In einer weiteren bevorzugten Ausführungsform des Systems befindet sich mindestens ein linearer Filter und/oder mindestens ein zweiter Integrator (INT2) im Signalpfad hinter dem ersten Integrator (INT1) und bevorzugt hinter dem optionalen nicht-linearen Filter (NLF). Die Komponenten sind jedenfalls nicht vor dem Eingang des Schätzers angeordnet.

Im Rahmen der Erfindung wurde erkannt, dass - im Gegensatz zum Stand der Technik - die Position der linearen Elemente nicht mehr beliebig längs der Signalkette verschoben werden kann. Vielmehr hängt deren Wirkung im erfindungsgemäßen Sensorsystem von der Positionierung vor oder hinter dem Eingang des Schätzers bzw. dem optionalen nicht-linearen Filter (NLF) ab. In der Regel ist jedoch eine Verschiebung längs des Signalpfades zwischen Empfänger und Eingang des Schätzers und/oder dem Eingang des optionalen nichtlinearen Filters (NLF) für lineare Verarbeitungskomponenten möglich. Analog ist dies auch für lineare Verarbeitungskomponenten, die zwischen dem Eingang des Schätzers bzw. dem optionalen nicht-linearen Filter (NLF) auf der einen Seite und dem Sender (H) oder dem Kompensator (K) auf der anderen Seite liegen, möglich. Für einen Fachmann wird eine Minimierung des Realisierungsaufwands bei der Positionierung ausschlaggebend sein.

In einer weiteren bevorzugten Ausführungsform des erfindungsgemäßen Sensorsystems ist die Dimension der n x m Matrizen, beispielsweise $S_{i,j}$, $YI_{i,j}$, $YIn_{i,j}$, $XI_{i,j}$, $ZI_{i,j}$, $NF_{i,j}$, $INF_{i,j}$, $S4_{i,j}$, etc., entweder

n mindestens 2 und m mindestens 1 oder

n mindestens 1 und m mindestens 2 oder

n mindestens 1 und m mindestens 1.

Im letzteren Fall muss jedoch ein Zeitmultiplex statt des bisher beschriebenen Raummultiplexes verwendet werden.

In einer weiteren bevorzugten Ausführungsform des erfindungsgemäßen Sensorsystems kann der optionale nicht-lineare Filter (NLF) durch mindestens ein Signal mindestens einer der besagten Regelwert-Matrizen $YI_{1\_i,j}$, $YI_{2\_i,j}$, $YI_{3\_i,j}$, $YI_{4\_i,j}$, $YI_{5\_i,j}$, $YI_{6\_i,j}$ und/oder mindestens einer der daraus abgeleiteten Matrizen $YIn_{i,j}$, $XI_{i,j}$, $ZI_{i,j}$, $M_{ref\_i,j}$ mittels des Schätzers (EST) gesteuert werden. Bei der Signalmatrix $M_{ref\_i,j}(t)$ handelt es sich um eine Matrix mit abgespeicherten Werten mindestens einer der Regelwert-Matrizen $YI_{1\_i,j}$, $YI_{2\_i,j}$, $YI_{3\_i,j}$, $YI_{4\_i,j}$, $YI_{5\_i,j}$, $YI_{6\_i,j}$ und/oder mindestens einer der daraus abgeleiteten Matrizen $YIn_{i,j}$, $XI_{i,j}$, $ZI_{i,j}$. Die Speicherung erfolgt in dem Referenzspeicher MRef. In dem Referenzspeicher werden Referenzwerte dieser Matrizen abgespeichert, die aus einer Referenzmessung mit einem Referenzsender (R) gewonnen wurden.

In einer weiteren bevorzugten Ausführungsform des erfindungsgemäßen Sensorsystems ermittelt ein Schätzer auf Basis mindestens eines Signals mindestens einer der Regelwert-Matrizen $YI_{1\_i,j}$, $YI_{2\_i,j}$, $YI_{3\_i,j}$, $YI_{4\_i,j}$, $YI_{5\_i,j}$, $YI_{6\_i,j}$ und/oder mindestens einer der daraus abgeleiteten Matrizen, insbesondere $YIn_{i,j}$, $XI_{i,j}$, $ZI_{i,j}$, $M_{ref\_i,j}$, die wahrscheinlichen Zeitpunkte des Eintreffens der Eingangssignalanteile (S0e(t)) des Empfängerausgangssignals (S0(t)) und/oder der korrespondierenden Ausgangsignalanteile (S1e(t)) des kompensierten modifizierten Empfängerausgangssignals (S1(t)). Diese ermöglichen eine Aussage über die Entfernung zu einem Objekt.

In einer weiteren bevorzugten Ausführungsform des erfindungsgemäßen Sensorsystems wird das Speisesignal (S5) durch gewichtete oder ungewichtete Summierung aus den Wavelets $s_{i,j}(t)$ erzeugt oder kann aus diesen erzeugt werden.

In einer weiteren bevorzugten Ausführungsform weist das Sensorsystem einen Referenzsender (R) auf, der zumindest zeitweise mit dem Speisesignal (S5) gespeist wird und zumindest zeitweise ein Referenzsignal (S11) direkt zu dem Empfänger sendet. Dieses Referenzsignal (S11) wird bevorzugt am Empfänger (D) als Referenzempfangssignal (S0r(t)) empfangen und in der Verarbeitungseinheit (LF) weiterverarbeitet. Dabei wird in einem Speicher $MRef_{i,j}(t)$ bevorzugt zumindest ein Signal (Regelwert-Signal) mindestens einer der Matrizen $YI_{i,j}$, (auch $YI_{1\_i,j}$, $YI_{2\_i,j}$, $YI_{3\_i,j}$, $YI_{4\_i,j}$, $YI_{5\_i,j}$, $YI_{6\_i,j}$), $YIn_{i,j}$, $XI_{i,j}$ oder $ZI_{i,j}$ als Referenzinformation abgelegt. Die Zurverfügungstellung von $ZI_{i,j}$ ist zur Vereinfachung in den Zeichnungen nicht aufgeführt.

In einer weiteren bevorzugten Ausführungsform des erfindungsgemäßen Sensorsystems wird das Referenzempfangssignal (S0r(t)) in der Verarbeitungseinheit weiterverarbeitet. Bevorzugt wird mindestens eine der Regelwert-Matrizen $YI_{1\_i,j}$, $YI_{2\_i,j}$, $YI_{3\_i,j}$, $YI_{4\_i,j}$, $YI_{5\_i,j}$, $YI_{6\_i,j}$ $YIn_{i,j}$, $XI_{i,j}$, $ZI_{i,j}$ in mindestens einem Referenz-Speicher MRef der Verarbeitungseinheit zumindest teilweise abgespeichert. Die Speicherung erfolgt bevorzugt wenigstens für einen vorgegebenen Zeitraum. Bevorzugt werden wenigstens einige der Regelwert-Signale mindestens einer der Regelwert-Matrizen zur Kompensation der spezifischen

Übertragungseigenschaften des Senders und des Empfängers verwendet, wobei auch die gerätespezifischen Eigenschaften kompensiert werden können.

Bevorzugt weist die Verarbeitungseinheit des Sensorsystems eine Speichereinheit (ME1, ME2, MRef) auf, in der Werte mindestens einer der Regelwert-Matrizen $YI_{1\_i,j}$, $YI_{2\_i,j}$, $YI_{3\_i,j}$, $YI_{4\_i,j}$, $YI_{5\_i,j}$, $YI_{6\_i,j}$, $YIn_{i,j}$, $XI_{i,j}$, $ZI_{i,j}$ gespeichert werden. Gleichzeitig kann die Speichereinheit bevorzugt mindestens einen dieser Werte mindestens einer der Regelwert-Matrizen in einer zeitlichen Tiefe von mehr als einem Wert speichern.

In einer weiteren bevorzugten Ausführungsform des Sensorsystems wird mindestens eine der Regelwert-Matrizen $YI_{1\_i,j}$, $YI_{2\_i,j}$, $YI_{3-i,j}$, $YI_{4-i,j}$, $YI_{5\_i,j}$, $YI_{6\_i,j}$, und/oder eine der Matrizen $YIn_{i,j}$, $XI_{i,j}$, $ZI_{i,j}$ in einer Echo-Auswerteeinheit derart weiterverarbeitet, dass die Echoanteile des Empfangssignals oder ein Echo-Zeitsignal bestimmt werden. Dabei kann auch das Echo-Zeitsignal ausgegeben oder weiterverarbeitet werden, bevorzugt um daraus die Entfernung zu einem Objekt zu bestimmen.

In einer weiteren bevorzugten Ausführungsform des Sensorsystems wird auf dieser Grundlage auf das Vorhandensein weiterer Objekte geschlossen, deren Entfernung bevorzugt aber nicht bestimmt wird. Dies kommt immer dann zum Tragen, wenn die Objektortungskapazität des Systems bereits ausgeschöpft ist. Alternativ können auch die Entfernungen zu mehreren Objekten bestimmt werden.

In einer bevorzugten Ausführungsform stellen die verwendeten Wavelets $s_{i,j}(t)$ aus jeweils einem ersten monofrequenten Signal und einem dazu um 90° phasenverschobenen zweiten monofrequenten Signal dar.

Außerdem kann der Empfänger (D) bevorzugt eine Avalanche-Diode sein, deren Empfängerausgangssignal S0(t) durch Modulation der Sperrspannung auf eine vorbestimmte Zwischenfrequenz gewandelt wird. Es ist offensichtlich, dass es in diesem Fall vorteilhaft ist, wenn die Wavelets $s_{i,j}(t)$, die für die Linearform (LF) verwendet werden, bevorzugt auf die Zwischenfrequenz, die sich auf Basis des Speisesignals (S5) und der Modulationsfrequenz ergibt, abgestimmt sind.

In einer weiteren bevorzugten Ausführungsform des erfindungsgemäßen Sensorsystems ist der Empfänger eine Drift-Field-Fotodiode, in der ein Element der Verarbeitungseinheit integriert ist. Bevorzugt ist eine Multiplikation als Teil der Linearform der Verarbeitungseinheit (LF) in der Drift-Field-Diode umfasst.

Zum besseren Verständnis wird die vorliegende Erfindung nochmals anhand der Figuren 5 bis 19 erläutert. Die hier dargestellten Besonderheiten können jedoch auch einzeln und in einer anderen Kombination und Zusammensetzung verwendet werden. Es müssen nicht alle in den Figuren dargestellten Elemente und Komponenten in bevorzugten Ausführungsformen vorhanden sein. (In den Figuren werden die Signale teilweise mit Großbuchstaben bezeichnet, während sie in der Beschreibung mit Kleinbuchstaben bezeichnet sind, um sie von den Matrizen zu unterscheiden und das Verständnis zu fördern.)

Figur 5 zeigt ein Beispiel einer erweiterten erfindungsgemäßen Vorrichtung, die neben den aus dem Stand der Technik bekannten Komponenten auch zusätzlich einen Schätzer (EST) und einen Referenzspeicher (MRef) aufweist. Darüber hinaus ist im Signalpfad hinter der Verarbeitungseinheit (LF), die die Linearform umfasst, eine Speichereinheit (ME1), eine optionaler Integrator (INT1) und ein weiterer Speicher (ME2) angeordnet. Durch Speicherung und Integration werden die Regelwertsignale $yi_{i,j}$ entsprechend umgewandelt, so dass am Ende dieser Signal-Teilstrecke, also am Ausgang der zweiten Speichereinheit (ME2) die Ausgangssignale $zi_{i,j}(t)$ zur Verfügung stehen. Diese Signale werden dem Schätzer zugeführt.

Die Signale $zi_{i,j}(t)$ werden darüber hinaus auch weiterverarbeitet, um das Speisesignal (S5) für den Sender (H) zu generieren und das Kompensatorspeisesignal (S3) für den Kompensator (K) zu generieren. Dies geschieht in der Rücktransformations-Einheit, die die Senderücktransformation (SRT) und die Kompensationsrücktransformation (KRT) umfasst. Bevor die Ausgangssignale $zi_{i,j}(t)$ der zweiten Speichereinheit zu der Rücktransformations-Einheit gelangen, können sie bevorzugt mittels eines optionalen Integriergliedes (INT2) und gegebenenfalls über einen ebenfalls optionalen Verstärker (V) weiterverarbeitet werden.

Die beiden Speichereinheiten (erster Speicher (ME1) und zweiter Speicher (ME2)) werden durch eine Steuereinheit (CRT) bedarfsgerecht angesteuert.

Der Referenzspeicher (MRef) wird mit dem integrierten Regelwertsignal $xi_{i,j}$ gespeist. Seine Funktion und die Erzeugung der dort abgelegten Regelwert-Signale werden später noch erläutert. Die im Referenzspeicher (MRef) abgespeicherten Signale werden dann an den Schätzer (EST) übergeben und dort gemeinsam mit den Ausgangssignalen der zweiten Speichereinheit (ME2) verarbeitet, um das Echo-Informationssignal zu erzeugen, aus dem auf die Entfernung eines Objekts zu dem Sensorsystem geschlossen werden kann.

Eine Signalerzeugungs-Einheit umfasst den Wavelet-Generator (WG), der wenigstens ein Wavelet-Basissignal $s_{i,j}(t)$ erzeugt und in das System einspeist. Das Wavelet-Signal $s_{i,j}(t)$ wird zum einen der Verarbeitungseinheit (LF) mit der Linearform zugeführt. Darüber hinaus wird es auch der Senderücktransformationseinheit (SRT) und der Kompensationsrücktransformationseinheit (KRT) zugeführt. Somit lässt sich sowohl der Kompensationssender (K) wie auch der Sender (H) regeln, um das System auszuregeln und einen stabilen Zustand zu erzeugen. Ziel ist es, das am Empfänger (D) nur noch ein Gleichsignal, bevorzugt ein Nullsignal anliegt. Hierbei sind Regelfehler und ein Signalrauschen zu vernachlässigen. Es wird darauf hingewiesen, dass das System auch nur den Sender (H) und das Senderspeisesignal (S5) oder nur das Kompensationsspeisesignal (S3) und den Kompensationssender (K) regeln kann. In dem gezeigten Beispiel werden jedoch bevorzugt beide Signale gleichzeitig geregelt.

Zur Erzeugung des Kompensatorspeisesignals (S3) wird das am Eingang der Rücktransformations-Einheit anliegende Signal ($S4_{i,j}$) einer Filtereinheit mit der Filterfunktion g() zugeführt. Nach Filterung mit diesem Kompensationsrücktransformationsfilter erfolgt eine Multiplikation mit dem Wavelet-Signal $s_{i,j}(t)$ in einer Multipliziereinheit m3$_{i,j}$. Dadurch entsteht das Rohkompensationssignal $f_{i,j\_3}(t)$. Dieses wird durch einen ersten Summierer ($\Sigma1$) zum Kompensatorspeisesignal (S3) aufsummiert.

Die Erzeugung des Senderspeisesignals (S5) erfolgt analog. Das Eingangssignal ($S4_{i,j}$) wird in einer zweiten Filtereinheit mit der Filterfunktion f() gefiltert und anschließend in einer Multipliziereinheit ($M5_{i,j}$) mit einem Wavelet-Signal $s_{i,j}(t)$ multipliziert. Das so gebildete Rohsendesignal $f_{i,j\_5}(t)$ wird anschließend in einem zweiten Summierer ($\Sigma2$) aufsummiert, wodurch das Senderspeisesignal (S5) entsteht.

Prinzipiell ist es auch denkbar, statt eines Wavelet-Generators WG bevorzugt einen ersten Wavelet-Generator WG und einen zweiten Wavelet-Generator WG_II zu verwenden, die beispiels- und vorzugsweise über eine Leitung (sync) miteinander synchronisiert sind. Dies ist insbesondere bei einer nichtlinearen Verzerrung der Kanäle oder des Empfangs durch den Empfänger von Vorteil. Hierzu sei auf die bereits beschriebene multiplizierende Überlagerung im Empfänger D verwiesen.

Dies ist nur ein bevorzugtes Beispiel für die Verwendung mehrerer Wavelet-Generatoren (WG, WG_II), deren Zahl nicht auf zwei beschränkt sein muss. Es ist beispielsweise auch denkbar, einen ersten Wavelet-Generator WG für die Ansteuerung eines Teils der Vorrichtung zu benutzen, die eine Linearform LF erstellt, einen zweiten Wavelet-Generator WG_II für die Erzeugung eines Kompensatorspeisesignals S3 zu verwenden, und einen dritten Wavelet-Generator WG_III für die Erzeugung eines Sendesignals S5 zu verwenden. Werden beispielsweise mehr als ein Sender H und/oder mehr als ein Detektor D und/oder mehr als ein Kompensationssender K mit zugehörigen Signalen verwendet, so sind bevorzugt noch mehr Wavelet-Generatoren denkbar.

Im Folgenden wird zur Vereinfachung im Wesentlichen nur der Fall mit einem Wavelet-Generator WG beschrieben.

Aus dem Stand der Technik ist es bekannt, dass es günstig ist, hinter der Linearform (Verarbeitungseinheit LF) eine Signalformung einzusetzen und so statt eines einfachen Proportionalreglers (P-Regler) beispielsweise einen Regler mit PI-Eigenschaften zu erhalten. Dies geschieht im Stand der Technik durch Einsatz eines Integrators. Im Gegensatz zum Stand der Technik ist es nun aber, wie bereits skizziert, nicht äquivalent, wo eine solche Signalformung durch Integration eingesetzt wird.

Sowohl die Signale $yi_{i,j}(t)$ der Ausgangssignalmatrix $YI_{i,j}$ der Linearform LF als auch die Signale $xi_{i,j}(t)$ der Ausgangssignalmatrix $XI_{i,j}$ der ersten Integrationseinheit INT1 können als Ausgangssignale des Systems zur weiteren Verarbeitung verwendet werden.

Es hat sich im Rahmen der Erfindung gezeigt, dass es günstig sein kann, nicht nur die aktuellen Werte der Signale $yi_{i,j}(t)$ der Ausgangssignalmatrix $YI_{i,j}$ der Linearform LF zu verwenden, sondern auch vergangene Werte der Signale $yi_{i,j}(t)$ zu einem oder mehreren früheren Zeitpunkten, z.B. bevorzugt auch um Ableitungen dieser Größen verwenden zu können. In Figur 5 ist beispielhaft eine bevorzugte zusätzliche erste Speichereinheit ME1 vorgesehen, die die Werte der Signale $yi_{i,j}(t)$ der Ausgangssignalmatrix $YI_{i,j}$ der Linearform LF zwischenspeichern kann. Spätestens an dieser Stelle ist es offensichtlich vorteilhaft und bevorzugt, zumindest einen Teil des Signalpfads digitalisiert und/oder insbesondere durch einen Signalprozessor zu realisieren. Insofern können bevorzugt mehrere oder alle der zuvor beschriebenen Funktionalitäten des Sensorsystems in einem einzelnen Regler CTR durchgeführt werden. In dem bevorzugten Beispiel von Figur 5 werden die Ausgangssignale $yi_{i,j}(t_n)$ der ersten Speichereinheit ME1 statt der Signale $yi_{i,j}(t)$ der Ausgangssignalmatrix $YI_{i,j}$ der Linearform LF als Eingangssignale der ersten Integrationseinheit INT1 verwendet. Natürlich ist es auch denkbar, diese direkt in den Schätzer einzuspeisen.

Andere bevorzugte Positionierungen solcher Speicher sind denkbar. So ist es beispielsweise, wie in Figur 5 dargestellt, auch möglich, eine zweite Speichereinheit ME2 vorzusehen, die bevorzugt die Werte der Signale $xi_{i,j}(t)$ der Ausgangssignalmatrix $XI_{i,j}$ der ersten Integrationseinheit INT1 zwischenspeichert. Die Signale $zi_{i,j}(t)$ der Ausgangssignalmatrix $ZI_{i,j}$ der bevorzugten zweiten Speichereinheit ME2 werden in dem Beispiel der Figur 5 statt der Werte der Signale $xi_{i,j}(t)$ der Ausgangssignalmatrix $XI_{i,j}$ der ersten Integrationseinheit INT1 dem Schätzer zugeführt.

Wie leicht zu erkennen ist, sind alle die zuvor diskutierten bevorzugten Variationen und Ausführungen nur einzelne Beispiele der möglichen Ausführungen der erfindungsgemäßen Vorrichtungen. Diese haben zumindest als Teilstruktur die Grundstruktur der Figuren 1 und 2 und den zusätzlichen Schätzer gemeinsam. Mehrere bevorzugte Sender H, Kompensationssender K und Empfänger D werden im zitierten Stand der Technik bereits ausführlich behandelt und sind in ihren speziellen Ausformungen ebenso wie die Kombinationen der zuvor diskutierten Elemente Teil dieser Offenbarung. Dies gilt auch für die folgenden beispielhaft beschriebenen Ausführungen.

Ganz zu Beginn wurde erwähnt, dass beispielsweise das Maximum der Signale $zi_{i,j}(t)$ gesucht werden kann und genau dieses als Echo-Informationssignal ausgegeben wird. Das Suchen des Maximums ist nur ein bevorzugtes Beispiel für eine von vielen Ausführungsformen des Schätzers. Die Maximumsuche wird beispielsweise mittels des erfindungsgemäßen Schätzers EST, also in einer Steuervorrichtung durchgeführt. Der Schätzer EST führt in der Regel Verfahren der statistischen Signaltheorie aus, um beispielsweise die Signale $yi_{i,j}(t)$, $yi_{i,j}(t_n)$, $xi_{i,j}(t)$, $zi_{i,j}(t)$ zu selektieren, die eine optimale Kompensation des Empfangssignals erlauben und eine Aussage zur Entfernung eines Objekts, einer Objekteigenschaft oder einer Eigenschaft der Übertragungsstrecke zu ermöglichen. Hier können auch neuronale Netzte, HMM-Erkenner (Hidden Markov Model), DTW-Erkenner (Dynamic-time-warping), Viterbi-Dekoder und Petri-Netze zum Einsatz kommen.

Somit ist der Schätzer EST ein Bestandteil der erfindungsgemäßen Vorrichtung und des erfindungsgemäßen Verfahrens, der sehr verschieden ausgeformt werden kann. Der bevorzugte Maximums-Schätzer und die darin verwirklichbare Methodik wurde bereits als eine mögliche Ausführungsform eines Schätzers beschrieben.

Der Schätzer wird bevorzugt nicht nur mit dem Regelwert-Signal $YI_{i,j}$ oder einem weiterverarbeiteten Regelwert-Signal, beispielsweise dem Signal $ZI_{i,j}$ beaufschlagt, sondern auch mit Werten aus einem Referenzspeicher MRef, der vorher abgespeicherte Regelwert-Signale umfasst und in dem diese Signale abgespeichert sind. In der Regel und bevorzugt werden in dem Schätzer dann die aktuellen Regelwertsignale mit den als Referenz abgespeicherten Regelwert-Signalen in Beziehung gesetzt, so dass beispielsweise der Maximumwert bei Ausführung des Schätzers als Maximumschätzer ermittelt werden kann und als Echo-Informationssignal ausgegeben werden kann.

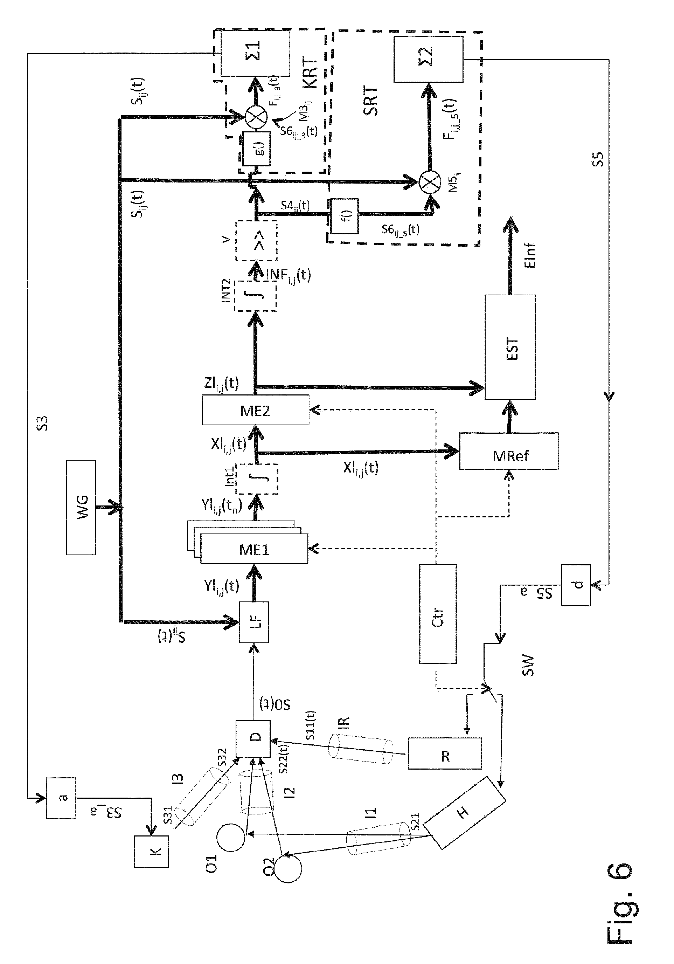

Anhand von Figur 6 wird nun erläutert, wie diese Referenzwerte gebildet werden.

Es ist nun denkbar, dass sich die Vorrichtung bevorzugt selbst vermisst, um eine Referenz zu bestimmen. Hierzu ist es beispielsweise denkbar, dass die Vorrichtung bevorzugt einen Referenzsender R umfasst, wie er beispielhaft in Figur 6 gezeigt ist. Der Referenzsender R strahlt bevorzugt über eine bekannte Referenzübertragungsstrecke IR überlagernd in den Empfänger D ein. Zur Selbstkalibration wird bevorzugt das unmittelbare Sendesignal S5_a vom Sender H auf den Referenzsender R, beispielsweise durch einen Schalter SW, umgeschaltet. Eine Ablaufsteuerung Ctr kontrolliert bevorzugt diesen Vorgang. Bevorzugt werden Werte der Signale, also bevorzugt die Signale $yi_{i,j}(t)$, $yi_{i,j}(t_n)$, $xi_{i,j}(t)$, $zi_{i,j}(t)$ der entsprechenden Matrizen $YI_{i,j}$, $YIn_{i,j}$, $XI_{i,j}$, $ZI_{i,j}$, in einem Referenzspeicher MRef zwischengespeichert. Der Schätzer EST kann nun bevorzugt diese zwischengespeicherten Referenzwerte verwenden, um beispielsweise den Untergrund durch Subtraktion oder Division zu eliminieren. Bevorzugt kann die Ablaufsteuerung Ctr zweckmäßiger Weise auch die Ansteuerung der anderen optionalen Speicher ME1, ME2 steuern. Selbstverständlich kann der Referenzsender R auch ohne die oder einige der Komponenten ME1, ME2, INT1, INT2, V, KRT, SRT, wie in den Figuren dargestellt, eingesetzt werden. Im weiteren Verlauf wird das Eliminieren des Untergrunds durch Division weiter unten erläutert werden.

Es wurde bereits erwähnt, dass bevorzugt ein System mit mehreren Wavelet-Generatoren denkbar ist. Ein spezielles System dieser Art umfasst zusätzlich einen nicht-linearen Filter und Verzögerungsglieder. Dieses System kann bevorzugt dadurch erzielt werden, dass der optionale nicht-lineare Filter NLF über ein, zwei oder eben mehr zusätzliche Ausgangsbusse verfügt, die die Verzögerungseinheiten für die Verzögerung der Signale $s_{i,j}(t)$ der Ausgangssignal-Matrix $S_{i,j}$ des Wavelet-Generators WG steuern. In der Figur 7 ist ein solches bevorzugtes System beispielhaft dargestellt. Der nicht-lineare Filter NLF verfügt zusätzlich über einen ersten Verzögerungssteuerbus $Dt_{i,j\_3}$ und einen zweiten Verzögerungssteuerbus $Dt_{i,j\_5}$. Es ist beispielsweise denkbar, dass der nicht-lineare Filter NLF sich bevorzugt in drei einzelne nicht-lineare Teilfilter mit je einem dieser Ausgangsbusse als Ausgang aufteilt. Für den Fachmann ist es offensichtlich, dass die Steuersignale $Dt_{i,j\_3}$ und $Dt_{i,j\_5}$ ggf. integriert und verstärkt werden können. Dies ist in den Zeichnungen zur besseren Übersichtlichkeit nicht eingetragen. Der nicht-lineare Filter wird bevorzugt über einen Steuersignal-Bus CTRS von dem Schätzer gesteuert.

Die Verzögerung bzw. Phasenregelung der Signale $s_{i,j}(t)$ der Ausgangssignal-Matrix $S_{i,j}$ des Wavelet-Generators WG für die Erzeugung des Sendesignals S5 wird in dem Beispiel bevorzugt in Abhängigkeit von dem zweiten Verzögerungssteuerbus $Dt_{i,j\_5}$ durch die erste Verzögerungseinheit $\Delta t1$ vorgenommen. Die somit verzögerten Basissignale $S_{i,j\_5}$ der Senderseite werden dann bevorzugt statt der Signale $s_{i,j}(t)$ der Ausgangssignal-Matrix $S_{i,j}$ des Wavelet-Generators WG der fünften Multipliziereinheit $M5_{ij}$ zugeführt.

Die Verzögerung bzw. Phasenregelung der Signale $s_{i,j}(t)$ der Ausgangssignal-Matrix $S_{i,j}$ des Wavelet-Generators WG für die Erzeugung des Kompensatorspeisesignals S3 wird in dem bevorzugten Beispiel analog in Abhängigkeit von dem ersten Verzögerungssteuerbus $Dt_{i,j\_3}$ durch die zweite Verzögerungseinheit $\Delta t2$ vorgenommen. Die somit verzögerten Basissignale $S_{i,j\_3}$ der Kompensationssenderseite werden dann statt der Signale $s_{i,j}(t)$ der Ausgangssignal-Matrix $S_{i,j}$ des Wavelet-Generators WG der jeweiligen dritten Multipliziereinheit $M3_{ij}$ zugeführt. Durch diese Konstruktion ist eine sehr feine Ausregelung des Regelkreises möglich.

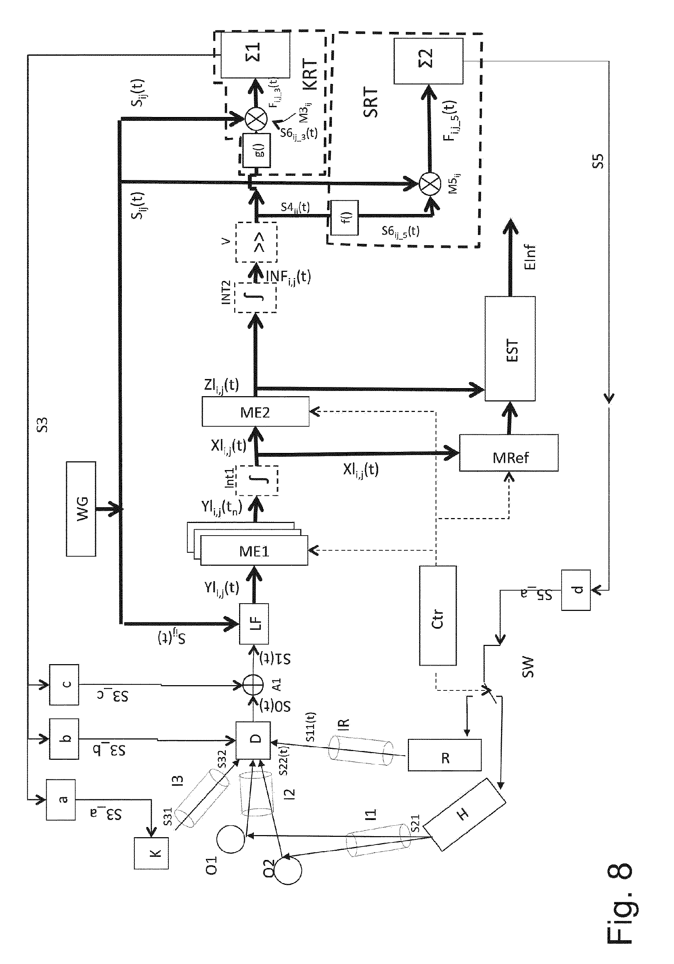

Wie bereits erwähnt, zeigen Figur 7 und 8 beispielhaft mehrere mögliche bevorzugte Alternativen der Kompensationseinspeisung, die einzeln oder in Kombination verwendet werden können. Die gestrichelt gezeichneten Komponenten (INT1, IN2, V) sind optional. Zur Vereinfachung sind KRT und SRT nicht genauer ausgeführt; hier wird auf die andere Figuren und die entsprechende Beschreibung verwiesen.

Neben der bereits besprochenen Kompensation über einen Kompensationssender K, der überlagernd in den Empfänger D einstrahlt, ist es bevorzugt auch denkbar, das Kompensationssignal S3 über einen Verstärker b in den Empfänger selbst einzuspeisen, wenn dessen Empfindlichkeit über ein Signal geändert werden kann. Die Verstärkung des Verstärkers b kann eins sein. Der Verstärker b kann über einen Offset verfügen.

Des Weiteren ist es möglich, bevorzugt das Kompensationssignal S3 über einen Verstärker c und einen Addierer A1 direkt in das Empfängerausgangssignal S0(t) oder an eine andere Stelle in der Regelschleife einzuspeisen. Die Verstärkung des Verstärkers c kann eins sein. Der Verstärker c kann über einen Offset verfügen.

Es ist natürlich in vielen Fällen sinnvoll, für jede oder einzelne der Rückkoppelmethoden bevorzugt eine separate Regelschleife mit einem separaten Kompensatorspeisesignal S3 aufzubauen. Dies ist hier aus Gründen der Übersichtlichkeit nicht dargestellt.

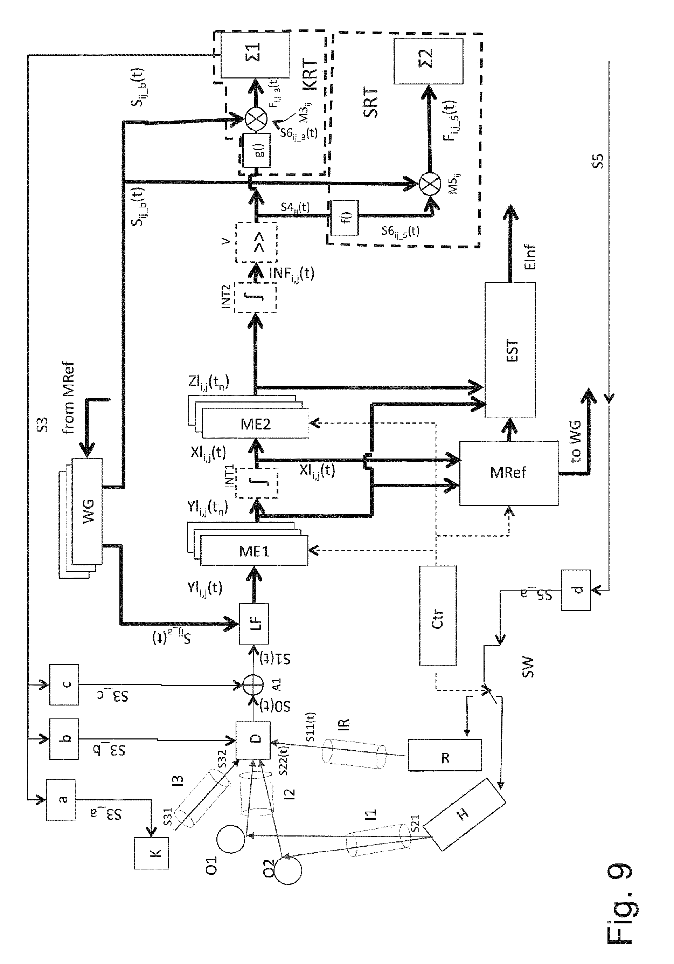

Figur 9 zeigt den beispielhaften Fall, dass das Sensorsystem über mehrere Wavelet-Generatoren WG, WG_II verfügt, die (teilweise oder alle) bevorzugt parametrisch durch den Schätzer und/oder die Referenzwerte, hier beispielsweise den Inhalt des Referenzspeichers MRef, gesteuert werden. So ist es beispielsweise denkbar, dass Wavelet-Signale erzeugt werden, die besonders wenig gestört werden oder zwei dicht beieinander liegende Objekte gut trennen. Wenn der Schätzer nämlich die Bewegung zweier Objekte überwacht, so kann er bevorzugt die Bahn der Objekte extrapolieren und die Auflösung, sprich das Frequenzspektrum, der Wavelets so anpassen, dass sich beispielsweise eine maximale Auflösung zu Ungunsten einer weiträumigen Überwachung ergibt. Das Verfahren lässt sich somit ideal an de gewünschten Anforderungen anpassen.

Figur 10 zeigt einige beispielhafte Wavelets $s_{i,j}(t)$. Die Wavelets $s_{i,j}(t)$ können bevorzugt aus einem Ur-Wavelet $s_{11}(t)$ durch zeitliche Verschiebung, zeitliche Streckung/Stauchung und Summierung/Subtraktion erzeugt werden. Für die Erfüllung der technischen Lehre ist es dabei unerheblich, ob eine solche zeitliche Verschiebung, zeitliche Streckung/Stauchung und Summierung/Subtraktion wirklich stattfindet oder ob die Signale direkt erzeugt werden. Wichtig ist in diesem Fall nur, dass zumindest ein Teil eines Signals als Ur-Wavelet $s_{11}(t)$ definiert werden kann und wesentliche Teile der anderen Signale $s_{i,j}(t)$ durch diese Operationen erzeugt werden können. Hinsichtlich der Theorie der Wavelets sei hier auf die einschlägige Literatur, beispielsweise Stéphane Mallat, "A Wavelet Tour of Signal Processing" Academic Press London 1997 verwiesen.

Sinus- und Cosinus-Signale mit unterschiedlicher Phasenverschiebung und/oder unterschiedlicher Frequenz können dementsprechend aus einer einzigen Sinus-Welle oder -Halbwelle hergeleitet werden. Bevorzugt können einzelne Pulse daher für die Herleitung von Rechtecksignalen unterschiedlicher Frequenz verwendet werden. Die ist beispielhaft in Figur 11 gezeigt.

Es ist auch möglich, dass nicht vollständig korrelierende, ggf. auch bandbegrenzte Zufallssignale verwendet werden, die sich ausdrücklich nicht unbedingt aus Wavelets herleiten lassen. Es ist ja gerade ein Vorteil der erfindungsgemäßen Vorrichtung und/oder des erfindungsgemäßen Verfahrens, die Korrelationen gerade zulassen. Es ist besonders vorteilhaft, wenn diese Zufallssignale zusammen mit den besprochenen Verzögerungsgliedern $\Delta t1$ und $\Delta t2$ verwendet werden. Insofern werden dann bevorzugt alle oder ein Teil der Wavelet-Generatoren durch Zufallszahlengeneratoren ersetzt. Dies würde die Systemstruktur aber nicht grundsätzlich ändern.

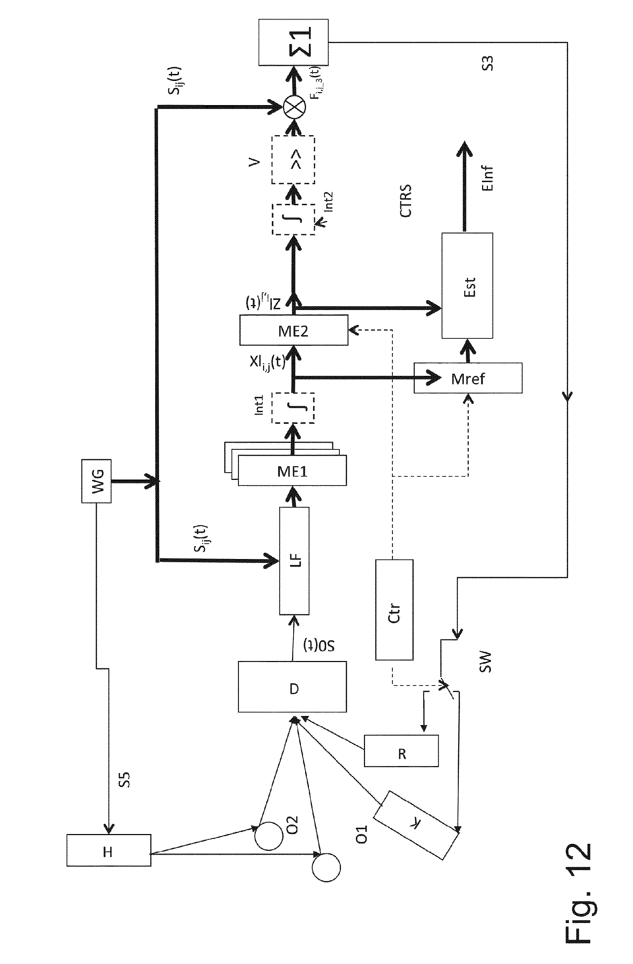

Figur 12 zeigt das Blockschaltbild eines bevorzugten Sensorsystem. Dabei wird der Sender H geregelt und es erfolgt eine kontinuierliche Phasen- bzw. Verzögerungsregelung. Das System weist in der Regel einen bevorzugten hochverstärkenden PI-Regler auf. Das besondere hier ist, dass der Wavelet-Generator WG direkt das Sendesignal S5 liefert.

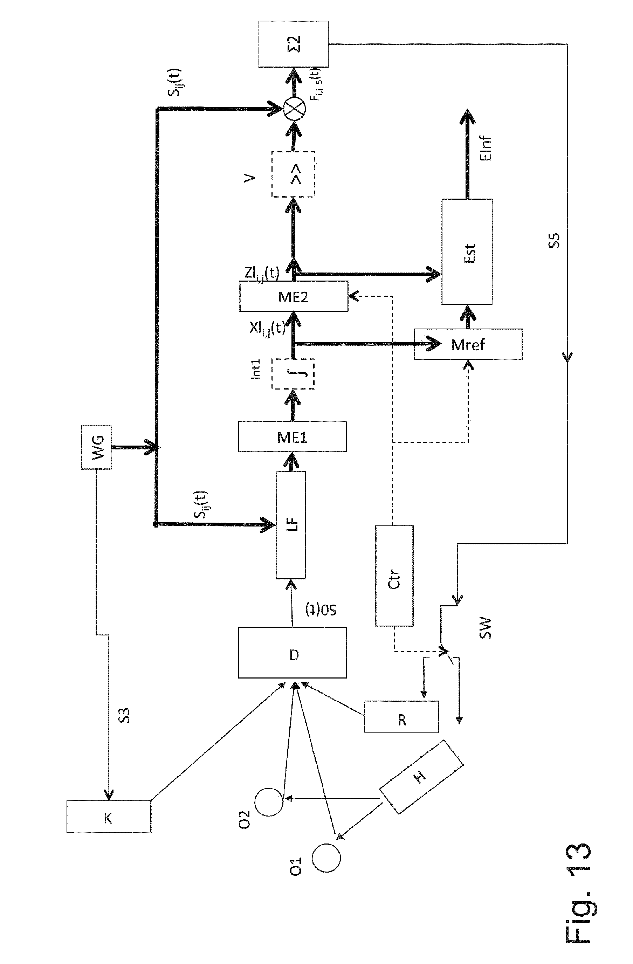

Figur 13 zeigt das Blockschaltbild einer bevorzugten Vorrichtung mit Senderregelung und mit Phasen- bzw. Verzögerungsanpassung durch Mischung orthogonaler Wavelets $s_{i,j}(t)$ und mit einem hochverstärkendem PI-Regler. Das besondere hier ist, dass der Wavelet-Generator WG direkt das Kompensatorspeisesignal S3 liefert.

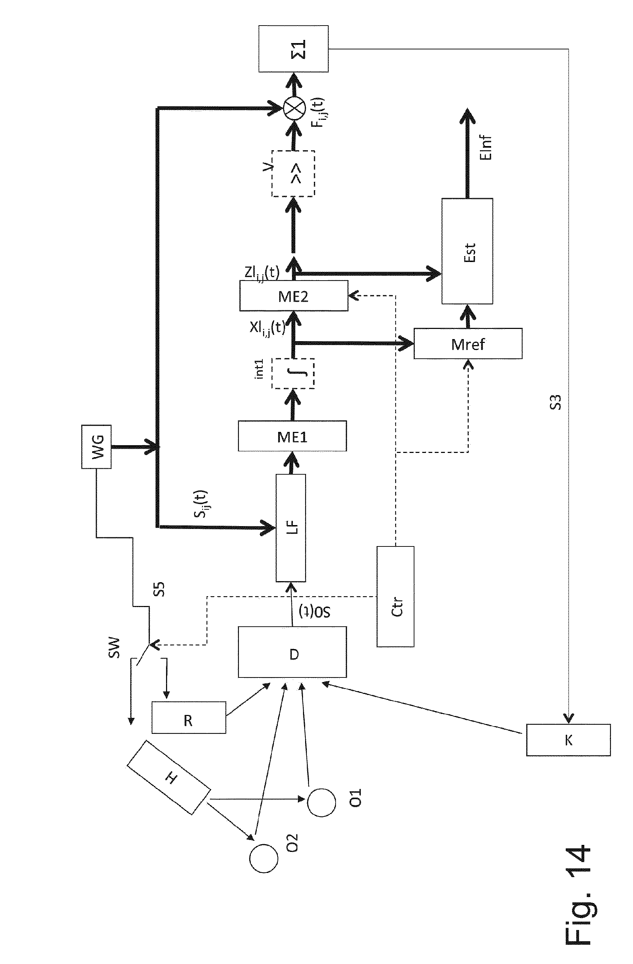

Figur 14 zeigt ein bevorzugtes System im Blockschaltbild mit Kompensationsregelung und hochverstärkendem PI-Regler. Das System kann mittels des Referenzsenders R, wie oben beschrieben, kalibriert werden. Die Kalibrierwerte werden bevorzugt im Speicher MRef abgelegt. Der Schätzer (EST) kann dann mit Hilfe dieser abgelegten Kalibrierwerte den Untergrund eliminieren.

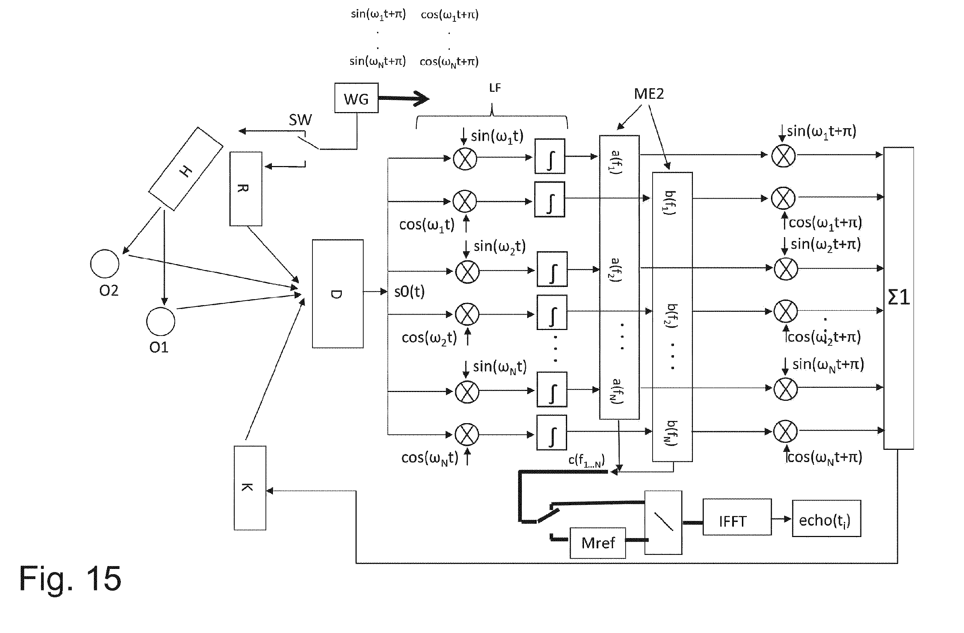

Figur 15 zeigt das Blockschaltbild der bevorzugten Vorrichtung unter Nutzung einer bevorzugten Ausgestaltung eines Frequenzbereichs-Verfahrens mit einem P-Regler ohne Verstärker. Die Wavelets $s_{i,j}(t)$ sind bevorzugt so gewählt, dass sich Paare aus jeweils einer Sinus- und einer dazu orthogonalen Cosinus-Funktion jeweils einer Frequenz ergeben. Die Frequenzen dieser Paare unterscheiden sich jeweils voneinander. Im Gegensatz zum Stand der Technik ist keine Orthogonalität unter den Paaren gefordert. Die Frequenzen der Sinus- und Cosinus-Signale müssen aber im Gegensatz zum Stand der Technik keine ganzzahligen Vielfachen einer Grundfrequenz sein, was einer Orthogonalitätsforderung gleichkäme. Zwischen den jeweils zwei Mitgliedern dieser Paare, also dem jeweiligen Cosinus- und Sinus-Signal, besteht aufgrund dieser Definition allerdings Orthogonalität innerhalb des Paares. Es ist also durchaus möglich, dass zumindest eine Teilmenge der Basissignale orthogonal zueinander ist.

Die Selektion der für die Weiterverarbeitung geeigneten Fourier-Koeffizienten aus der Menge der insgesamt so ermittelten Fourier-Koeffizienten $a(f_1)$ bis $a(f_N)$ und $b(f_1)$ bis $b(f_N)$ erfolgt bevorzugt später im Signalpfad. Dies kann in einer bevorzugten Ausführungsform auch durch den nicht-linearen Filter NLF erfolgen. Die Linearform LF ist bevorzugt eine Fourier-Koeffizientenbestimmung, die bevorzugt durch eine Multiplikation des Eingangssignals S0(t) (das bevorzugt dem Verarbeitungszwischensignal oder dem Empfängerausgangssignal entspricht) mit dem jeweiligen Sinus- oder Cosinus-Signal und anschließender Integration in der Linearform LF erfolgt. Der zweite Speicher ME2 speichert zumindest einen Teil der Fourier-Koeffizienten $a(f_1)$ bis $a(f_N)$ und $b(f_1)$ bis $b(f_N)$ geeignet ab.

Zunächst wird auch hier der Referenzsender R mit den Wavelet-Signalen angesteuert. Die Fourier-Koeffizienten werden in dem zweiten Speicher ME2 gespeichert. Der Referenzspeicher MRef wird zum Abspeichern der so ermittelten Referenz-Fourier-Koeffizienten $a(f_1)$ bis $a(f_N)$ und $b(f_1)$ bis $b(f_N)$ an den zweiten Speicher ME2 angeschlossen. In einem nächsten Schritt wird der Schalter zur Auswahl der Sendequelle umgeschaltet, so dass der Sender H mit den Wavelet-Signalen aus dem Wavelet-Generator WG gespeist wird. Nun werden erneut die Fourier-Koeffizienten in dem zweiten Speicher ME2 gespeichert.

Nach der Abspeicherung der Referenz-Fourier-Koeffizienten im Referenzspeicher MRef kann bevorzugt durch Quotientenbildung im Schätzer zwischen den Werten in dem Referenzspeicher MRef und den neu gemessenen Fourier-Koeffizienten $a(f_1)$ bis $a(f_N)$ und $b(f_1)$ bis $b(f_N)$ ein neuer Satz Koeffizienten bestimmt werden. Diese Koeffizienten sind die Fourier-Koeffizienten einer Reflektion an einem Objekt O.

Der Schätzer (EST) dividiert also bevorzugt jeden so ermittelten Fourier-Koeffizienten durch seinen korrespondierenden und zuvor im Referenzspeicher MRef abgelegten zugehörigen Koeffizienten, auch Kalibrationswert genannt. Durch eine anschließende inverse Fourier-Transformation (IFFT) in einer entsprechenden IFFT-Vorrichtung kann bevorzugt wieder ein zeitliches Echo-Signal $echo(t_i)$ als Ergebnis dieser inversen FFT-Rücktransformation ermittelt werden, das ein Echo-Informationssignal Elnf ist. In diesem Echo-Signal $echo(t_i)$ wurde der Untergrund durch die beschriebene Division durch die Kalibrationswerte im Referenzspeicher (MRef) eliminiert. Hiernach kann die Echoentscheidung pegel- und/oder zeitabhängig erfolgen. Das bedeutet, dass beispielsweise ein Echo als vorliegend angenommen wird, wenn ein vorgegebener absoluter oder relativer Pegel beispielsweise zu einem vorbestimmten Zeitpunkt überschritten wird.

Ein solcher bevorzugter Echoentscheider mit Vorverarbeitung über das Spektrum arbeitet beispielsweise auf Basis des Wiener-Chintschin-Theorems. Das hier beschriebene System ist also in der Lage, Störer zuverlässig zu unterdrücken.

Die Rücktransformation erfolgt bevorzugt hinter dem nicht-linearen Filter NLF durch zumindest teilweise, vorzugsweise aber komplette Multiplikation der Fourier-Koeffizienten $a(f_1)$ bis $a(f_N)$ und $b(f_1)$ bis $b(f_N)$, sofern diese durch den Filter durchgelassen werden, mit dem jeweiligen mit -1 multiplizierten Sinus- oder Cosinus-Signal bzw. mit dem um $\pi$ (Pi) verschobenen Sinus- oder Cosinus-Signal. Durch Summation der einzelnen Signalanteile in dem ersten Summierer $\Sigma 1$ wird das Kompensatorspeisesignal S3 gebildet und dem Kompensator K zugeführt.

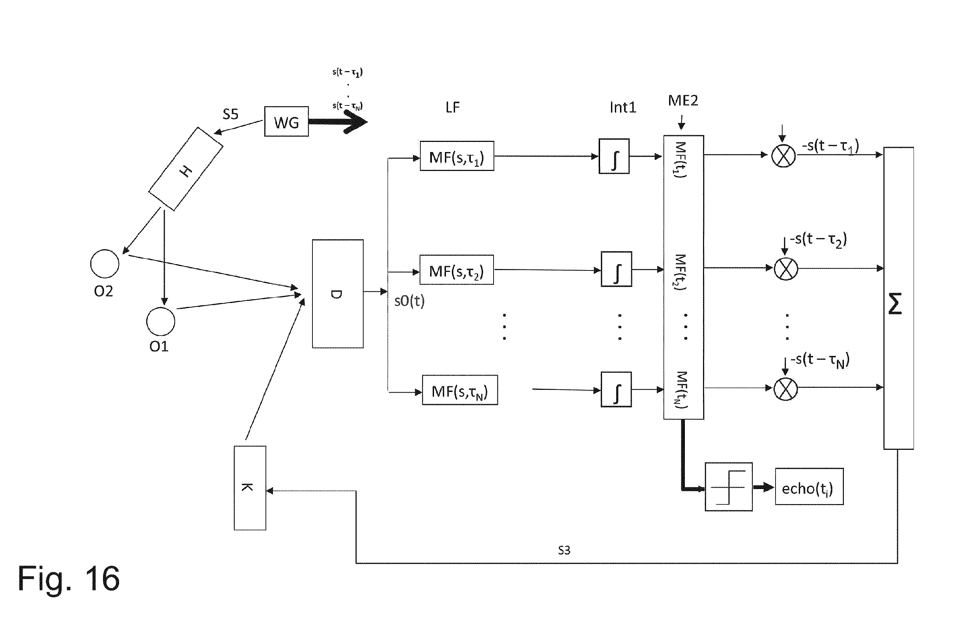

Figur 16 zeigt das schematische Blockschaltbild einer bevorzugten Gestaltung der erfindungsgemäßen Vorrichtung unter Verwendung des Zeitbereichsverfahrens. Der Wavelet-Generator WG erzeugt bevorzugt das Sendesignal S5 und eine Reihe von N Wavelets $s(t-\tau 1)$ bis $s(t-\tau N)$, die sich nur durch eine unterschiedliche Verzögerung unterscheiden. Vorzugsweise korrelieren die erzeugten N Wavelets $s(t-\tau 1)$ bis $s(t-\tau N)$ mit dem Sendesignal S5 in der Art, dass sie eine zeitlich verschobene Version desselben darstellen. Gegebenenfalls können sie in der Amplitude modifiziert sein.

Die Linearform wird nun durch jeweils einen bevorzugten Matched-Filter $MF(s,\tau_1)$ bis $MF(s,\tau_N)$ gebildet. Der jeweilige Matched-Filter lässt jeweils den Signalanteil ungefiltert durch, der dem jeweils zugehörigen Signal $s(t-\tau_1)$ bis $s(t-\tau N)$ entspricht. Alle anderen Signalanteile, die dem zugehörigen Signal $s(t-\tau_1)$ bis $s(t-\tau N)$ nicht entsprechen, werden bevorzugt nicht durchgelassen oder zumindest stark gedämpft, dass sie bevorzugt ignoriert werden können. Der Pegel wird bevorzugt durch die nachfolgende Integration ermittelt, die noch Teil der Linearform LF ist. Mit den im zweiten Speicher ME2 abgespeicherten Werten wird bevorzugt eine Einheitssprungfunktion multipliziert und durch eine zweite Bank aus Matched-Filtern gesendet. Die Summe der Ausgangssignale dieser zweiten Matched-Filter-Bank ergibt dann bevorzugt das gesuchte Echo-Signal $echo(t_i)$. In diesem Beispiel ist der Untergrund allerdings nicht abgezogen.

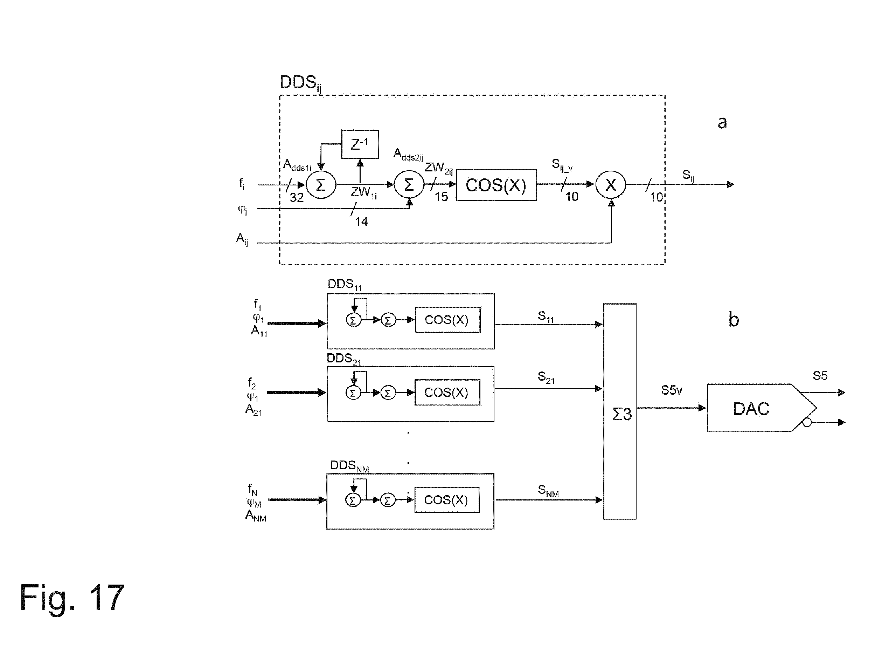

Die Figuren 17a und 17b zeigen ein bevorzugtes Beispiel eines Wavelet-Generators. In Figur 17a ist ein sogenannter Direct-Digital-Sequenzer DDS im Detail dargestellt. Der i-te DDS-Block erhält als Vorgabe eine 32-Bit-Zahl $f_i$, die die zu erzeugende Frequenz für den Kanal i,j vorgibt. Des Weiteren erhält er bevorzugt einen 14-Bit-Phasenoffset $\varphi_j$ und eine Amplitudenvorgabe $A_{i,j}$. Der vorgegebene Frequenzwert $f_i$ wird nun kontinuierlich durch den ersten DDS-Addierer $Adds_{1\_i}$ zu dem Zwischenwert $ZW_{1\_i}$ hinzuaddiert. Je höher $f_i$ ist, desto schneller kommt es zum Überlauf und damit zum Neustart. Zu den höchsten 14 Bit dieses Zwischenwertes $ZW_{1-i}$ wird kontinuierlich durch den zweiten DDS-Addierer $Adds_{2\_j}$ der 14-Bit-Phasenoffset $\varphi_j$ addiert. Es ergibt sich der zweite Zwischenwert $ZW_{2\_i,j}$. In diesem bevorzugten Beispiel ist dies ein 15-Bit-Wert. Dieser erzeugt mit Hilfe einer Look-Up-Table $cos(x)$ das Ausgangssignal $s_{i,j\_v}(t)$, das mit der Amplitudenvorgabe $A_{i,j}$ zum eigentlichen Ausgangssignal $s_{i,j}(t)$ multipliziert wird.

Der Vorteil dieses Verfahrens ist, dass das Ur-Wavelet - hier eine einzelne $cos(t)$-Schwingung - in dem Look-Up-Table abgelegt werden kann. Wird dieses als Speicher ausgelegt, so können beliebige Wavelet-Sätze beispielsweise während des Betriebs erzeugt und ggf. durch Umprogrammierung des Speichers ausgetauscht werden.

Es ist von Vorteil und bevorzugt, wenn aus dem Look-Up-Table auch das Signal zum Zurücksetzen des Addierers $Adds_{1\_i}$ gegeben wird. Erst durch dieses Zurücksetzen am Ende einer Periode kommt es zu einer echten Schwingung und periodischen Signalisierung.

Mehrere solche DDS-Blöcke werden bevorzugt durch einen Summierer $\Sigma 3$ zu einem Signal $S5\_v$ zusammengefasst, aus dem durch Digital-zu-Analogwandlung DAC das Sendesignal S5 erzeugt werden kann. Neben dieser beispielhaften Realisierung des Wavelet-Generators sind sehr viele andere Realisierungsmöglichkeiten gegeben, die weit über den Inhalt dieser Offenbarung hinausgehen würden.

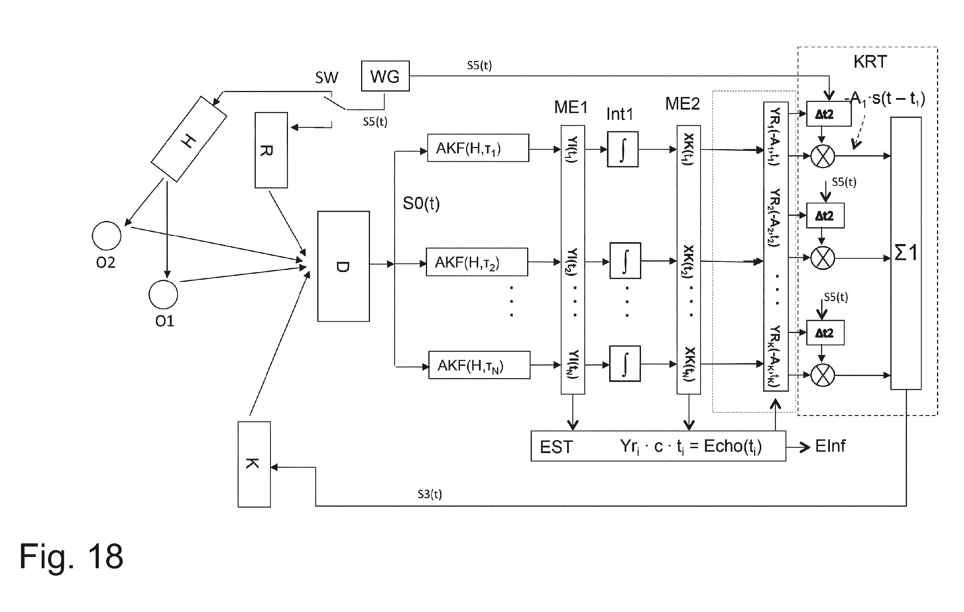

Figur 18 zeigt ein beispielhaftes bevorzugtes System mit Autokorrelationsfiltern $AKF(H, \tau_1)$ bis $AKF(H, \tau_N)$ als Linearform LF. Der Schätzer EST berechnet bevorzugt aus den Regelwert-Signalen $y_i(t_1)$ bis $y_i(t_N)$ und dessen zwischengespeicherten integrierten Signalen $xk(t_1)$ bis $xk(t_N)$ das Echosignal $Echo(t_i)$. Dieses Signal wird in diesem Beispiel als Echo-Information EInf ausgegeben. Der Schätzer kann dabei beispielsweise einen Viterbi-Algorithmus mit einer angepassten Markov-Kette einsetzen, um die Bewegung von zuvor bereits erkannten Objekten zu berücksichtigen. Das gezeigte beispielhafte System gemäß Figur 18 verwendet das erfindungsgemäße Verfahren im Zeitbereich, wobei der Entscheider (Schätzer) die Echos auswertet. Bei diesem Verfahren wird die Laufzeit des Lichts für die Bestimmung des Abstands verwendet.

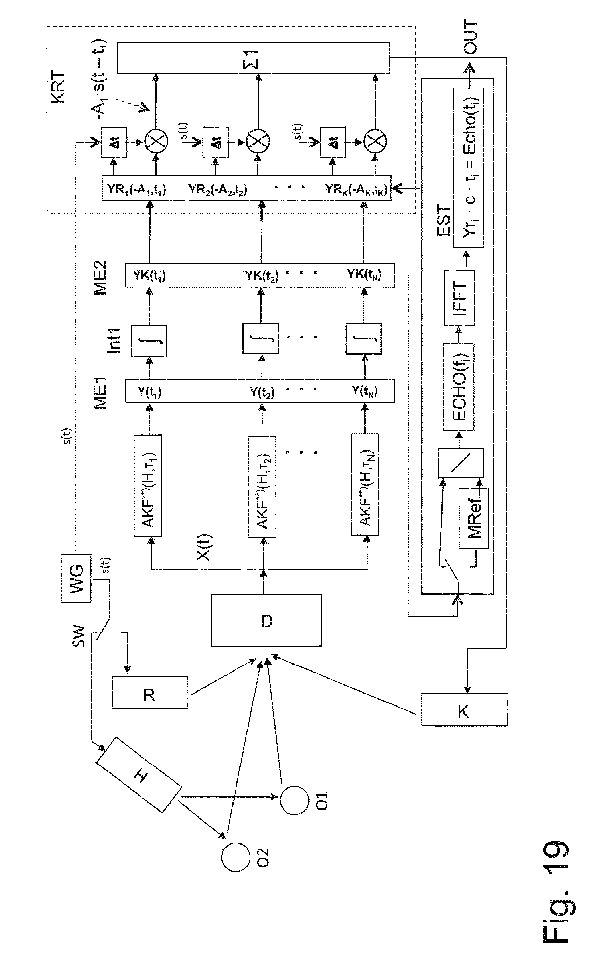

Figur 19 zeigt das System gemäß Figur 18, wobei bevorzugt unter Nutzung des Wiener-Chintschin-Theorems ein im Referenzspeicher MRef zwischengespeichertes Referenzspektrum aus dem Messspektrum eliminiert wird. Hierzu wird, wie oben bereits beschrieben, mittels des Referenzsenders R zunächst das Referenzspektrum $YK(t_1)$ bis $YK(t_n)$ erzeugt und dann gemessen. Das gemessene Spektrum wird im Speicher MRef abgelegt. Danach wird der Referenzsender R abgeschaltet und mit dem Sender H ein Objekt O oder mehreren Messobjekte O1, 02 vermessen. Das neue Spektrum $YK(t_1)$ bis $YK(t_n)$ wird bevorzugt durch die korrespondierenden Werte, die in dem Referenzspeicher MRef gespeichert sind, geteilt. Das sich ergebende Echo-Spektrum $ECHO(f_i)$ wird bevorzugt durch eine inverse Fourier-Transformation (IFFT) in das Echosignal zurückgewandet. Hier können wieder nicht-lineare Schätzalgorithmen zur Bestimmung der Reflexions-Peaks eingesetzt werden. Diese können in einer besonderen Ausführungsform auch die Kompensationssignalerzeugung beispielsweise unter Zuhilfenahme des optionalen nicht-linearen Filters NLF steuern. In dem hier gezeigten Beispiel umfasst der Schätzer (EST) auch den Referenzspeicher (MRef). Er kann auch separat ausgeführt sein.

Die ermittelten Reflexionen, die den Entfernungen zum jeweiligen Objekt entsprechen, werden von dem Entscheider (Schätzer EST) als Signal OUT ausgegeben. Dieses ist das Echo-Informationssignal EInf.

Bezugszeichenliste

| a | Erster Verstärker für das Kompensatorspeisesignal |
|---|---|
| A | Beliebiges Signal für die Erläuterung der Linearform |
| b | Zweiter Verstärker für das Kompensatorspeisesignal |
| B | Beliebiges Signal für die Erläuterung der Linearform |
| C | Dritter Verstärker für das Kompensatorspeisesignal |
| CT | Halios Regler |
| CTRS | Steuersignal-Bus für den nicht-linearen Filter NLF |
| Ctr | Ablaufsteuerung |
| d | Speisesignalverstärker |
| D | Empfänger (Detektor) |
| D1 | Empfänger (Detektor) |
| $Dt_{i,j\_3}$ | erster Verzögerungssteuerbus |
| $Dt_{i,j\_5}$ | zweiter Verzögerungssteuerbus |
| $\Delta t1$ | Erste Verzögerungseinheit $\Delta t1$ für die Phasen- bzw. Verzögerungsregelung der Signalkomponenten des Sendesignals S5 |
| $\Delta t2$ | Zweite Verzögerungseinheit $\Delta t2$ für die Phasen- bzw. Verzögerungsregelung der Signalkomponenten des Kompensatorspeisesignals S3 |
| echo(t) | Echosignal (Zeitbereich) |
| EInf | Echo-Informationssignal |
| EST | Schätzer |
| $f_0$ | Grundfrequenz |
| f() | zweite Gewichtungsmatrix; Filterfunktion |
| $F_{i,j\_3}(t)$ | Rohkompensationssignal (in der Regel eine Signalmatrix.) |
| $F_{i,j\_5}(t)$ | Rohsendesignal (in der Regel eine Signalmatrix.) |
| g() | erste Gewichtungsmatrix; Filterfunktion |
| G1 | Signalgenerator wie im Stand der Technik beschrieben |
| H | Sender |
| H1 | Sender |
| I1 | Erste Übertragungsstrecke |
| I2 | Zweite Übertragungsstrecke |
| I3 | Dritte Übertragungsstrecke (Diese ist typischerweise in ihren Eigenschaften näherungsweise bekannt.) |
| INT1 | Erste Integratoreinheit aus einem oder mehreren Integratoren |
| INT2 | Zweite Integratoreinheit aus einem oder mehreren Integratoren |
| $inf_{i,j}(t)$ | Integriertes Ausgangssignal der zweiten Integratoreinheit INT2, Wert der Ausgangssignalmatrix $INF_{i,j}$ |
| $INF_{i,j}$ | integrierte Ausgangssignalmatrix $INF_{i,j}$ der zweiten Integratoreinheit INT2 |

(fortgesetzt)

| | |
|---|---|
| IR | Referenzübertragungsstrecke |
| K | Kompensationssender |
| LF | Linearform. Die Linearform verknüpft mindestens zwei Signale miteinander und ergibt mindestens ein Ausgangssignal. Bei den Signalen kann es sich auch um je eine Signal-Matrix handeln. Eine Linearform hat die Eigenschaft, dass die Multiplikation eines Eingangssignals mit einem Faktor a zu einer Multiplikation des oder der zugehörigen Ausgangssignale um den Faktor a führt. Die Verknüpfung der Summe zweier Signale mit einem dritten Signal mittels einer Linearform ist äquivalent zu der Summierung der Verknüpfungen jedes der beiden Signale vor der Addition mit dem dritten Signal mittels je einer gleichen Linearform und anschließender Addition. Typische Linearformen sind beispielsweise Skalar-Produkte, $L^2$-Normen, Faltungen, Autokorrelationsfilter, Matched-Filter etc. |
| LF(A,B) | Bezeichnet im Text die Verknüpfung zweier Signale A und B mittels einer Linearform. (siehe auch LF) |
| $M3_{ij}$ | Dritte Multipliziereinheit bestehend aus verschiedenen Multiplizierern |
| $M5_{ij}$ | Fünfte Multipliziereinheit bestehend aus verschiedenen Multiplizierern |
| ME1 | Erster Speicher zur Speicherung der Werte der Signale $yi_{i,j}(t)$ der Ausgangssignalmatrix $YI_{i,j}(t)$ der Linearform LF |
| ME2 | Zweiter Speicher zur Speicherung der Werte der Signale $xi_{i,j}(t)$ der Ausgangssignalmatrix $XI_{i,j}(t)$ der ersten Integrationseinheit Int1 |
| MRef | Referenzspeicher. |
| $Mref_{-i,j}(t)$ | Ausgangssignalmatrix des Referenzspeichers M Ref. |
| $NF_{i,j}$ | Ausgangssignalmatrix $NF_{i,j}$ des nicht-linearen Filters NLF. Dabei müssen nicht alle Signale $nf_{i,j}(t)$ der Ausgangssignalmatrix $NF_{i,j}$ tatsächlich vorhanden oder von Null verschieden sein. |
| $nf_{i,j}(t)$ | Signal $nf_{i,j}(t)$ der Ausgangssignalmatrix $NF_{i,j}$ des nicht-linearen Filters NLF. Nicht alle Signale $nf_{i,j}(t)$ müssen in der Ausgangssignalmatrix $NF_{i,j}$ tatsächlich vorhanden oder von Null verschieden sein. |
| O | Objekt in der Übertragungsstrecke, bevorzugt zwischen der Übertragungsstrecke 11 und der Übertragungsstrecke I2. Das Objekt O kann auch selbst eine Übertragungsstrecke sein. |
| O1 | Erstes Objekt in der Übertragungsstrecke. Das Objekt O1 kann auch selbst eine Übertragungsstrecke sein. |
| O2 | Zweites Objekt in der Übertragungsstrecke. Das Objekt 02 kann auch selbst eine Übertragungsstrecke sein. |
| P | Ur-Wavelet-Periode |
| Pa | Ur-Wavelet-Periode |
| PB | Ur-Wavelet-Periode |
| R | Referenzsender |
| $S_{-1}$ bis $S_3$ | Signalanteile des Signals s(t), wobei s(t) im Frequenzbereich als S(f) dargestellt ist. |
| S0(t) | Empfängerausgangssignal |
| S0e(t) | Der Signalanteil im Empfängerausgangssignal S0(t) der auf die Modifikation des Übertragungsstreckenausgangssignals S22(t) durch das Objekt oder die Objekte (O1, 02...) zurückzuführen ist. Er korreliert daher mit dem entsprechenden Anteil (S22e(t)) im ersten Übertragungsstreckenausgangssignal S22(t). |
| S0r(t) | Referenzempfangssignal |
| S1(t) | Modifiziertes Empfängerausgangssignal |

(fortgesetzt)

| | | |
|---|---|---|
| | S1e(t) | Der Signalanteil im modifizierten Empfängerausgangssignal S1 (t), der auf die Modifikation des Übertragungsstreckenausgangssignals S22(t) durch das Objekt oder die Objekte (O1, 02...) zurückzuführen ist. Er korreliert daher mit dem entsprechenden Anteil (S22e(t)) im ersten Übertragungsstreckenausgangssignal S22(t) und dem Anteil S0e(t) im Empfängerausgangssignal S0(t). |
| | S3 | Kompensatorspeisesignal |
| | S4 | Regelsignal (im Stand-der-Technik-Halios), dass als Ausgangssignal verwendet wird. Das Signal S4 stellt den Messwert des HALIOS Systems dar. |
| | $S4_{i,j}$ | Ausgangssignalmatrix $S4_{i,j}$ der Verstärkereinheit V |
| | $S4_{i,j}(t)$ | Ausgangssignal $S4_{i,j}(t)$ der Ausgangssignalmatrix $S4_{i,j}(t)$ der Verstärkereinheit V |
| | S5 | Sendesignal |
| | S5_a | Unmittelbares Sendesignal |
| | $S6_{i,j\_3}(t)$ | Kompensationspegelmatrix |
| | $S6_{i,j\_5}(t)$ | Sendepegelmatrix |
| | S11 | Referenzsignal |
| | S21 | Gesendetes Sendersignal |
| | S22(t) | Erstes Übertragungsstreckenausgangssignal |
| | S22e(t) | Der Signalanteil im ersten Übertragungsstreckenausgangssignal S22, der auf die Modifikation dieses Signals durch das Objekt oder die Objekte (O1, 02...) zurückzuführen ist. |
| | S31 | Gesendetes Kompensationssendersignal |
| | S32 | Zweites Übertragungsstreckenausgangssignal |
| | $S_{i,j}$ | Ausgangssignal-Matrix $S_{i,j}$ des Wavelet-Generators (WG) mit den Ausgangssignalen $s_{i,j}(t)$ |
| | $S_{i,j}(t)$ | Ausgangssignal $s_{i,j}(t)$ der Ausgangssignal-Matrix $S_{i,j}$ des Wavelet-Generators (WG) |
| | $S_{i,j\_a}(t)$ | Ausgangssignal $S_{i,j\_a}(t)$ des ersten Wavelet-Generators (WG_I) |
| | $S_{i,j\_b}(t)$ | Ausgangssignal $s_{i,j\_b}(t)$ des zweiten Wavelet-Generators (WG_II) |
| | $S_{i,j-c}(t)$ | Ausgangssignal $S_{i,j\_c}(t)$ des dritten Wavelet-Generators (WG_III) |
| | $s_{i,j\_5}$ | verzögerten Basissignale $S_{i,j\_5}$ der Senderseite |
| | $S_{i,j\_3}$ | verzögerten Basissignale $s_{i,j\_3}$ der Kompensationssenderseite |
| | S(f) | Signalbetragsspektrum. Das Signalbetragsspektrum ist der Betrag der Fouriertransformierten des Signals S(t) |
| | S(t) | Allgemeines Signal, dass sich aus mehreren Harmonischen $S_{-1}$ bis $S_3$ zusammensetzt. Es handelt sich um ein Signal, das als beispielhaftes Empfängerausgangssignal S0(t) zu Anfang dieser Offenbarung diskutiert wird. |
| | SW | Schalter zum Umschalten des unmittelbaren Sendesignals S5_a. |
| | T | Periodenlänge / Zeitdauer |
| | Ta | Periodenlänge / Zeitdauer |
| | Tb | Periodenlänge / Zeitdauer |
| | Σ1 | Erster Summierer. Dieser berechnet das Kompensatorspeisesignal S3. |
| | Σ2 | Zweiter Summierer. Dieser berechnet das Sendesignal S5. |
| | WG | Wavelet-Generator |
| | WG_II, WG_III | Zweite bzw. dritter Wavelet-Generator |

(fortgesetzt)

| | |
|---|---|
| $XI_{i,j}$ | Ausgangssignalmatrix $XI_{i,j}$ der ersten Integrationseinheit INT1 |
| $xi_{i,j}(t)$ | integrierte Regelwert-Signale $xi_{i,j}(t)$ der Ausgangssignalmatrix $XI_{i,j}$ der ersten Integrationseinheit INT1 |
| $YI_{i,j}$ | Ausgangssignalmatrix $YI_{i,j}$ der Linearform LF |
| $YI_1$, $YI_{1\_i,j}$ | Erste Ausgangssignalmatrix $YI_{1\_i,j}$ der Linearform LF |
| $YI_2$, $YI_{2\_i,j}$ | Zweite Ausgangssignalmatrix $YI_{2\_i,j}$ der Linearform LF |
| $YI_3$, $YI_{3\_i,j}$ | Dritte Ausgangssignalmatrix $YI_{3\_i,j}$ der Linearform LF |
| $YI_4$, $YI_{4\_i,j}$ | Vierte Ausgangssignalmatrix $YI_{4\_i,j}$ der Linearform LF |
| $YI_5$, $YI_{5\_i,j}$ | Fünfte Ausgangssignalmatrix $YI_{5\_i,j}$ der Linearform LF |
| $YI_6$, $YI_{6\_i,j}$ | Sechste Ausgangssignalmatrix $YI_{6\_i,j}$ der Linearform LF |
| $yi_{i,j}(t)$ | Regelwert-Signale $yi_{i,j}(t)$ der Ausgangssignalmatrix $YI_{i,j}$ der Linearform LF |
| $yi_{1\_j,j}(t)$ | Erste Regelwert-Signale $yi_{1\_i,j}(t)$ der ersten Ausgangssignalmatrix $YI_{1\_i,j}$ der Linearform LF, wobei diese durch Verknüpfung mittels der Linearform LF gebildet werden. |
| $yi_{2\_i,j}(t)$ | Zweite Regelwert-Signale $yi_{2\_i,j}(t)$ der ersten Ausgangssignalmatrix $YI_{2\_i,j}$ der Linearform LF, wobei diese in der Linearform LF durch Multiplikation gebildet werden. |
| $Yi_{3\_i,j}(t)$ | Dritte Regelwert-Signale $Yi_{3\_i,j}(t)$ der ersten Ausgangssignalmatrix $YI_{3\_i,j}$ der Linearform LF, wobei diese in der Linearform LF durch Multiplikation und anschließende Filterung und/oder Integration gebildet werden. |
| $yi_{l4\_i,j}(t)$ | Vierte Regelwert-Signale $Yi_{4-i,j}(t)$ der ersten Ausgangssignalmatrix $YI_{4\_i,j}$ der Linearform LF, wobei diese in der Linearform LF durch Bildung eines Skalar-Produkts gebildet werden. |
| $yi_{5\_i,j}(t)$ | Fünfte Regelwert-Signale $yi_{5\_i,j}(t)$ der ersten Ausgangssignalmatrix $YI_{5\_i,j}$ der Linearform LF, wobei diese in der Linearform LF durch eine Korrelationsfilter gebildet werden. |
| $yi_{6\_i,j}(t)$ | Sechste Regelwert-Signale $Yi_{6\_i,j}(t)$ der ersten Ausgangssignalmatrix $YI_{6\_i,j}$ der Linearform LF, wobei diese in der Linearform LF durch ein Matched-Filter gebildet werden. |
| $YIn_{i,j}$ | Ausgangssignalmatrix $YIn_{i,j}$ mit den Regelwert-Signalen $yi_{i,j}(t_n)$ zum Zeitpunkt $t_n$ |
| $yi_{i,j}(t_n)$ | Regelwert-Signale $yi_{i,j}(t_n)$ der Ausgangssignalmatrix $YIn_{i,j}$ zum Zeitpunkt $t_n$ |
| $ZI_{i,j}$ | Ausgangssignalmatrix $ZI_{i,j}$ der zweiten Speichereinheit ME2 |
| $zi_{i,j}(t)$ | Regelwert-Signale $zi_{i,j}(t)$ der Ausgangssignalmatrix $ZI_{i,j}$ der zweiten Speichereinheit ME2 |

**Patentansprüche**

1. Sensorsystem zur Erkennung mindestens eines Objekts (O1, 02) in einer Übertragungsstrecke (I), die eine erste Übertragungsstrecke (11) und eine zweite Übertragungsstrecke (12) einschließt, zwischen einem Sender (H) und einem Empfänger (D),
umfassend

    - mindestens einen Sender (H) und mindestens einen Empfänger (D),
    - wobei der Sender (H) mit einem Speisesignal (S5) angesteuert wird, um zumindest ein bekanntes Sendesignal (S21) des Senders (H) in die Übertragungsstrecke (I) hinein zu senden, das nach Durchgang durch mindestens einen Teil der Übertragungsstrecke (I) und Beeinflussung durch mindestens ein Objekt (O1, 02) als modifiziertes Sendesignal zumindest zu einem Empfänger (D) gelangt und
    - wobei der Empfänger (D) zumindest das von dem Sender (H) ausgesandte und durch mindestens ein Objekt (O1, 02) modifizierte Sendesignal (S21) als modifiziertes Empfangssignal (S22) empfängt und daraus zumindest ein Empfängerausgangssignal (S0) mit wenigstens einem modifizierten Empfängerausgangssignalanteil (S0e) bildet,
    - eine Verarbeitungseinheit (LF), um ein das Empfängerausgangssignal (S0) umfassendes Verarbeitungszwischensignal weiterzuverarbeiten und um mindestens einen modifizierten Empfängerausgangssignalanteil (S0e) zu separieren und daraus zumindest eine Regelwert-Matrix (YI) mit Regelwert-Signalen ($yi_{i,j}$) zu erzeugen, wobei mindestens eines der Regelwert-Signale ($yi_{i,j}$) von Null verschieden ist,

- eine Signal-Erzeugungs-Einheit mit einem Wavelet-Generator (WG), der wenigstens ein Wavelet ($s_{i,j}$) als Basissignal erzeugt, das zu wenigstens einem Speisesignal (S5) oder wenigstens einem Kompensationsspeisesignal (S3) weiterverarbeitet wird,

- einen Schätzer (EST) zur Selektion wenigstens eines der Regelwert-Signale ($yi_{i,j}$) und zur Ermittlung eines Echosignals (echo(t)) eines Objekts (O) in der Übertragungsstrecke (I), aus dem die Bestimmung der Entfernung des Objekts (O) zu dem Sensorsystem und/oder der Reflexionseigenschaften eines Objekts (O) und/oder der Transmissionseigenschaften der Übertragungsstrecke (I) erfolgen kann,

- eine Rücktransformations-Einheit, die aus zumindest einem Teil der Regelwert-Signale ($yi_{i,j}$) eine Senderücktransformation (SRT) durchführt und das Speisesignal (S5) erzeugt und/oder eine Kompensationsrücktransformation (KRT) durchführt und das Kompensationsspeisesignal (S3) erzeugt, wobei

- eine Rückführung des Kompensationsspeisesignals (S3) in das Sensorsystem (1) hinein erfolgt,
- das Sensorsystem stabil ausgeregelt ist, und

- wobei mindestens ein Regelwert-Signal ($yi_{i,j}$) oder ein daraus abgeleitetes Regelwert-Signal ($xi_{i,j}$, $zi_{i,j}$) ein Maß für die Eigenschaft oder den Abstand eines Objekts (O) oder die Eigenschaft der Übertragungsstrecke (I, I1, I2) ist.

2. Sensorsystem nach Anspruch 1, **gekennzeichnet durch** einen Filter, der zumindest einen Teil der Regelwert-Signale ($yi_{i,j}$) zu Filter-Ausgangssignalen umwandelt, wobei der Filter **durch** den Schätzer (EST) gesteuert wird.

3. Sensorsystem nach Anspruch 2, **dadurch gekennzeichnet, dass** der Filter ein nicht-linearer Filter (NLF) ist und durch den Schätzer (EST) gesteuert wird.

4. Sensorsystem nach einem der vorhergehenden Ansprüche, **dadurch gekennzeichnet, dass** der Schätzer (EST) ein Maximum-Schätzer ist.

5. Sensorsystem nach dem vorausgehenden Anspruch, **dadurch gekennzeichnet, dass** der Schätzer von einem Regelwert-Signal ($yi_{i,j}$) aus einem Referenzspeicher (MRef) gespeist wird.

6. Sensorsystem nach einem der vorhergehenden Ansprüche, **dadurch gekennzeichnet, dass** der Schätzer von einem auf einem Regelwert-Signal ($yi_{i,j}$) basierenden, weiterverarbeiteten Signal, bevorzugt aus einem Ausgangssignal eines im Signalpfad hinter der Verarbeitungseinheit (LF) angeordneten Filters oder Integrators (INT1), gespeist wird.

7. Sensorsystem nach einem der vorhergehenden Ansprüche, **dadurch gekennzeichnet, dass**

- der Wavelet-Generator (WG) wenigstens zwei Wavelets ($s_{i,j}$) als Basissignale erzeugt, wobei je zwei Wavelets ($s_{i,j}$) ein Paar bestehend aus einer Sinus-Funktion und einer dazu orthogonalen Cosinus-Funktion bilden,
- in der Verarbeitungseinheit (LF) mittels der Linearform Fourier-Koeffizienten gebildet werden, bevorzugt durch Multiplikation des Verarbeitungszwischensignals mit der jeweiligen Sinus- oder Cosinus-Funktion und anschließender Integration,
- in dem Schätzer (EST) eine Quotientenbildung von Referenz-Fourier-Koeffizienten, die mittels eines Referenzsenders (R) und der Verarbeitungseinheit (LF) erzeugt wurden, und ermittelten Fourier-Koeffizienten erfolgt, und
- in einer IFFT-Einheit (IFFT) das Echosignal (echo(t)) mittels einer inversen Fourier-Transformation gebildet wird.

8. Sensorsystem nach einem der vorhergehenden Ansprüche, **dadurch gekennzeichnet, dass** zur Rückführung des Kompensationsspeisesignals (S3)

- das Kompensationsspeisesignal (S3) mit einer ersten Kompensationsfilterfunktion (a(S3)) verstärkt und/oder gefiltert wird und als erstes Kompensatorsignal (S3_a) über einen Kompensationssender (K) und eine dritte Übertragungsstrecke (13) summierend oder multiplizierend überlagernd zum Empfänger (D) gelangt, und /oder
- das Kompensationsspeisesignal (S3) mit einer zweiten Kompensationsfilterfunktion (b(S3)) verstärkt und/oder gefiltert wird und als zweites Kompensatorsignal (S3_b) summierend oder multiplizierend überlagernd direkt in den Empfänger (D) hinein geleitet wird, und/oder

- das Kompensationsspeisesignal (S3) mit einer dritten Kompensationsfilterfunktion (c(S3)) verstärkt und/oder gefiltert wird und als drittes Kompensatorsignal (S3_c) summierend in einem Addierer (A1) mit dem Empfängerausgangssignal (S0) zum kompensierten Empfängerausgangssignal (S1) verarbeitet wird, und

- das Verarbeitungszwischensignal aus dem Empfängerausgangssignal (S0) oder dem kompensierten Empfängerausgangssignal (S1) gebildet wird.

9. Sensorsystem nach einem der Ansprüche 2 oder 3, **dadurch gekennzeichnet, dass**

- ein linearer Filter und/oder ein Integrator (INT1) im Signalpfad vor dem Eingang des Schätzers und bevorzugt vor dem Filter und/oder
- ein linearer Filter und/oder ein Integrator (INT2) im Signalpfad hinter dem Eingang des Schätzers und bevorzugt hinter dem Filter angeordnet ist.

10. Sensorsystem nach einem oder mehreren der vorhergehenden Ansprüche, **gekennzeichnet durch** einen Referenzsender (R), der mit dem Speisesignal (S5) gespeist wird und zumindest zeitweise ein Referenzsignal (S11) direkt zu dem Empfänger (D) sendet, das am Empfänger (D) als Referenzempfangssignal (S0r) empfangen und in der Verarbeitungseinheit (LF) weiterverarbeitet wird, wobei

- in einem Referenzspeicher (MRef$_{i,j}$) mindestens ein Regelwert-Signal (yi$_{i,j}$) der Regelwert-Matrix (YI$_{i,j}$) als Referenzinformation abgelegt wird, und
- bevorzugt mindestens eines der Regelwert-Signale (yi$_{i,j}$) in einer zeitlichen Tiefe von mehr als einem Wert gespeichert wird.

11. Sensorsystem nach einem der vorangehenden Ansprüche, **dadurch gekennzeichnet, dass** das Speisesignal (S5) durch gewichtete oder ungewichtete Summierung aus den Wavelets (s$_{i,j}$) gebildet wird und wobei bevorzugt wenigstens ein Teil der Wavelets (s$_{i,j}$) durch zeitliche Verschiebung, zeitliche Stauchung und/oder zeitliche Streckung aus einem Ur-Wavelet (s$_{1,1}$) gebildet werden.

12. Sensorsystem nach Anspruch 10, **dadurch gekennzeichnet, dass** die erste Verarbeitungseinheit (LF) das Verarbeitungszwischensignal mit jeweils einem der Wavelets (s$_{i,j}$, s$_{i,j\_a}$, s$_{i,j\_b}$) verknüpft, wobei das Ergebnis dieser n x m Verknüpfungen die Regelwert-Matrix (YI) in Form der ersten Regelwert-Signale (yi$_{i,j}$) ist und wobei die Verknüpfungen mit Hilfe jeweils
einer stets gleichartigen Linearform und/oder
einer Multiplikation und/oder
einer Multiplikation gefolgt von einer Filterung oder Integration und/oder
eines stets gleichartigen Skalar-Produkts und/oder eines stets gleichartigen Korrelationsfilters
erfolgt und wobei

- nicht jede der n x m Verknüpfungen erfolgen oder ausgeführt werden bzw. jeder der Korrelationsfilter vorhanden sein muss und
- einzelne der n x m Regelwert-Signale (yi$_{i,j}$) zu Null gesetzt oder weggelassen werden können.

13. Sensorsystem nach einem der vorhergehenden Ansprüche, **dadurch gekennzeichnet, dass** im Signalablauf des Sensorsystems (1) hinter der Verarbeitungseinheit (LF), bevorzugt vor dem nicht-linearen Filter (NLF),
ein erster Speicher (ME1), in dem mindestens eines der Regelwert-Signale (yi$_{i,j}$) für zumindest einen Speicherzeitpunkt (t$_n$) gespeichert ist, und/oder
ein erster Integrator (INT1), der mindestens eines der an seinem Eingang anliegenden Regelwert-Signale (yi$_{i,j}$, yi$_{i,j}$(t$_n$)) integriert, und/oder
ein zweiter Speicher (ME2), in dem mindestens eines der an seinem Eingang anliegenden Regelwert-Signale (yi$_{i,j}$, yi$_{i,j}$(t$_n$), xi$_{i,j}$) für zumindest einen Speicherzeitpunkt (t$_m$) gespeichert ist, und/oder
ein zweiter Integrator (INT2), der mindestens eines der an seinem Eingang anliegenden Regelwert-Signale (yi$_{i,j}$, yi$_{i,j}$(t$_n$), xi$_{i,j}$, zi$_{i,j}$) integriert, und/oder
ein Verstärker (V), der mindestens eines an seinem Eingang anliegenden Signale verstärkt,
angeordnet ist.

14. Sensorsystem nach einem der vorhergehenden Ansprüche, **dadurch gekennzeichnet, dass** das Echo-Zeitsignal (echo(t)) ausgegeben oder weiterverarbeitet wird, um daraus die Entfernung zu einem Objekt (O) zu bestimmen oder um auf das Vorhandensein weiterer Objekte (O) zu schließen, deren Entfernung nicht bestimmt wird.

Fig. 1

Fig. 2

EP 2 924 459 A1

a)

S(f) $S_{-1}$ $S_0$ $S_1$ $S_2$ $S_3$

$-f_0$ 0 $f_0$ $2*f_0$ $3*f_0$ f

b)

A(f) $A_1$

$f_0$ f

c)

$S_1(f) < A(f)*S(f) >= S_1(f)$

$S_1$

$f_0$ f

Fig. 3

Fig. 4

EP 2 924 459 A1

Fig. 5

Fig. 6

Fig. 7

Fig. 8

Fig. 9

Fig. 10

Fig. 11

Fig. 12

Fig. 13

Fig. 14

Fig. 15

Fig. 16

Fig. 17

Fig. 18

Fig. 19

EP 2 924 459 A1

**Europäisches Patentamt**
**European Patent Office**
**Office européen des brevets**

# EUROPÄISCHER RECHERCHENBERICHT

**Nummer der Anmeldung**

EP 14 16 1556

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | EP 2 631 674 A1 (ELMOS SEMICONDUCTOR AG [DE]) 28. August 2013 (2013-08-28) * das ganze Dokument * ----- | 1-14 | INV. G01S17/10 G01S17/46 G01N21/17 G01S7/487 G01S7/497 |
| X | US 3 734 631 A (JUSTICE G ET AL) 22. Mai 1973 (1973-05-22) * das ganze Dokument * ----- | 1-14 | |
| X | WO 2008/092611 A1 (REIME GERD [DE]) 7. August 2008 (2008-08-07) * das ganze Dokument * ----- | 1-14 | |

| RECHERCHIERTE SACHGEBIETE (IPC) |
|---|
| G01S G01N |

Der vorliegende Recherchenbericht wurde für alle Patentansprüche erstellt

| Recherchenort | Abschlußdatum der Recherche | Prüfer |
|---|---|---|
| München | 8. September 2014 | Damp, Stephan |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.........................................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**                    EP 14 16 1556

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-09-2014

| Im Recherchenbericht angeführtes Patentdokument | Datum der Veröffentlichung | Mitglied(er) der Patentfamilie | Datum der Veröffentlichung |
|---|---|---|---|
| EP 2631674 A1 | 28-08-2013 | DE 102012015423 A1<br>DE 102012015442 A1<br>DE 102013000380 A1<br>EP 2631674 A1<br>WO 2013124018 A1 | 29-08-2013<br>29-08-2013<br>29-08-2013<br>28-08-2013<br>29-08-2013 |
| US 3734631 A | 22-05-1973 | DE 2225319 A1<br>JP S522637 B1<br>US 3734631 A | 14-12-1972<br>22-01-1977<br>22-05-1973 |
| WO 2008092611 A1 | 07-08-2008 | DE 102007005187 A1<br>EP 2118680 A1<br>JP 2011511261 A<br>US 2010182588 A1<br>WO 2008092611 A1 | 04-09-2008<br>18-11-2009<br>07-04-2011<br>22-07-2010<br>07-08-2008 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012024597
- DE 102013013664
- WO 2013124018 A
- DE 10001955 A1
- DE 10024156 A1
- DE 19839730 C1
- DE 930983 U1
- DE 10001943 C1

- DE 10346741 B3
- DE 102004025345 B3
- DE 102005013325 A1
- DE 102005010745 B3
- DE 102007005187 B4
- EP 2631674 A1
- DE 10001943 C2

**In der Beschreibung aufgeführte Nicht-Patentliteratur**

- **VON STÉPHANE MALLAT.** A Wavelet Tour of Signal Processing. Academic Press, 1997

- **STÉPHANE MALLAT.** A Wavelet Tour of Signal Processing. Academic Press, 1997